# EUROPÄISCHE PATENTANMELDUNG

(11) **EP 4 443 017 A1**
(43) Veröffentlichungstag der Anmeldung: **09.10.2024**
(21) Anmeldenummer: 23166359.2
(22) Anmeldetag: 03.04.2023
(51) Int. Cl.: F16H 1/32

(54) **GETRIEBE**

(71) Anmelder: Spinea s.r.o., 080 01 Haniska (SK)
(72) Erfinder: FECKO, Tibor, 080 01 Presov (SK); SUCKA, Daniel, 080 06 Presov-Nizná Sebastová (SK)
(74) Vertreter: Jeck, Jonathan

(57) **Zusammenfassung**

Es wird ein Getriebe (01, 01.1, 01.2, 01.3) beschrieben, mit einem Hohlkörper (2) mit einer Hohlkörperachse (2x), mindestens einer in diesem abwälzenden Zykloidenscheibe (16, 17) mit mindestens einer außermittigen Öffnung, einem um die Hohlkörperachse (2x) drehbar gelagerten Drehkörper (1) und einer oder mehreren jeweils an einem sich entlang einer Fortsatzachse (13x) parallel zur Hohlkörperachse (2x) erstreckenden kreiszylinderförmigen außermittigen Fortsatz (1g) des Drehkörpers (1) gemeinsam um die Hohlkörperachse (2x) umlaufend drehbar angeordneten und gegenüber dem Drehkörper (1) drehbar gelagerten außermittigen Exzenterwellen (13) mit einer der Anzahl der Zykloidenscheiben (16, 17) entsprechenden Zahl von exzentrischen Abschnitten (13e), mit denen die außermittigen Exzenterwellen (13) in jeweils einer außermittigen Öffnung der mindestens einen Zykloidenscheibe (16, 17) drehbar gelagert sind, und mit einer der Fortsatzachse (13x) zugewandten inneren Mantelfläche, umfassend eine Lageranordnung mit dem außermittigen Fortsatz (1g) und der an diesem um die Fortsatzachse (13x) drehbar gelagerten außermittigen Exzenterwelle (13), zwischen denen zwei Wälzlagerringe angeordnet sind. Zumindest ein Abschnitt einer sich parallel zur Fortsatzachse (13x) erstreckenden, konzentrisch um diese angeordneten Fortsatzoberfläche ist als eine erste Wälzkörperlauffläche (1i) ausgebildet. Entlang der dem Fortsatz (1g) zugewandten inneren Mantelfläche ist ein axialer Trennsteg ausgebildet. Zumindest die durch den Trennsteg voneinander getrennten Partien der inneren Mantelfläche sind als zweite Wälzkörperlaufflächen (13i) ausgebildet. In axialer Richtung beidseitig des Trennstegs ist jeweils ein Wälzlagerring zwischen den jeweiligen ersten und zweiten Wälzkörperlaufflächen (1i, 13i) angeordnet. In axialer Richtung beidseitig der Wälzlagerringe ist jeweils ein die Wälzlagerringe in ihren Positionen auf den Wälzkörperlaufflächen (1i, 13i) haltender Stützring (11, 20) angeordnet. Die Stützringe (11, 20) überragen zumindest eine der Wälzkörperlaufflächen (1i, 13i) normal zur Fortsatzachse (13x), um die Wälzlagerringe in axialer Position zu halten.

## Beschreibung

Die Erfindung betrifft ein Getriebe gemäß dem Oberbegriff des Anspruchs 1.

Zykloidgetriebe und Planetengetriebe sind Getriebeformen, die eine hohe Belastbarkeit, einen geringen Bauraumbedarf und ein großes Übersetzungsverhältnis aufweisen und darüber hinaus nicht selbsthemmend sind.

Ein Zykloidgetriebe umfasst einen Hohlkörper mit einer Hohlkörperachse. Diese bildet eine zentrale Achse des Zykloidgetriebes. Das Zykloidgetriebe umfasst außerdem:
- mindestens eine in dem Hohlkörper abwälzende Zykloidenscheibe,
- mindestens eine Exzenterwelle mit einer der Anzahl der Zykloidenscheiben entsprechenden Zahl von jeweils an oder in einer der Zykloidenscheiben drehbar gelagerten exzentrischen Abschnitten,
- einen um die zentrale Achse drehbar am oder im Hohlkörper gelagerten Drehkörper, sowie
- Transformationsmittel zur Umwandlung der Bewegungen der einen oder mehreren Zykloidenscheiben bei deren Abwälzung im Hohlkörper in eine Rotationsbewegung des Drehkörpers.

Beispielsweise kann die Zykloidenscheibe mit einer zentralen Öffnung und mit mindestens einer außermittigen Öffnung versehen sein. Entlang der zentralen Achse kann sich eine zentrale Exzenterwelle erstrecken. Jeder deren der Anzahl der Zykloidenscheiben entsprechenden Zahl exzentrischer Abschnitte ist in einer zentralen Öffnung einer Zykloidenscheibe drehbar angeordnet. Die Transformationsmittel umfassen eine höchstens der Anzahl der außermittigen Öffnungen entsprechenden Zahl von gemeinsam um die zentrale Achse drehbar angeordneten außermittigen Elementen. Typischerweise sind die außermittigen Elemente Teil des Drehkörpers, welcher mit einer Welle verbunden sein kann, diese umfassen kann oder von dieser umfasst sein kann.

Ein Planetengetriebe ist beispielsweise ein Stirn- oder Reibradgetriebe, welches neben gestellfesten Wellen auch Wellen besitzt, die auf Kreisbahnen im Gestell umlaufen. Die Achsen der umlaufenden Wellen können parallel zu den Achsen der gestellfesten Wellen verlaufen. Auf den umlaufenden Wellen drehende Planetenräder umkreisen ein zentrales Sonnenrad.

Wichtig ist, in diesem Zusammenhang voranzustellen, dass im vorliegenden Dokument der Begriff Achse im Gegensatz zu dem Begriff Welle eine geometrische Achse und nicht ein Maschinenelement bezeichnet.

Ein besonders hohes Übersetzungsverhältnis kann durch ein zwei- oder mehrstufiges Getriebe erhalten werden, welches ein eine erste Getriebestufe bildendes Zykloidgetriebe und ein eine zweite Getriebestufe bildendes Planetengetriebe kombiniert. Hierbei dienen die Bezeichnungen erste und zweite Getriebestufe lediglich der Unterscheidung und stellen keine vorgegebene Reihenfolge dar. Unter anderem ist dies auch dadurch begründet, dass weder Zykloidgetriebe noch Planetengetriebe selbsthemmend sind. Dementsprechend können deren beispielsweise durch Wellen gebildete Eingangs- und Ausgangsorgane in dem Sinne vertauscht werden, dass sie sowohl von der einen als auch von der anderen Welle her ohne zu blockieren antreibbar sind.

Ein als hierzu dienende Getriebestufe vorgesehenes Zykloidgetriebe ist vorteilhaft mit einer oder mehreren drehbar am Drehkörper gelagerten, außermittigen Exzenterwellen mit jeweils einer der Anzahl der Zykloidenscheiben entsprechenden Zahl von exzentrischen Abschnitten, die in außermittigen Öffnungen der Zykloidenscheiben drehbar gelagert sind ausgestattet. Planetenräder des hierzu als Getriebestufe dienenden Planetengetriebes sind unverdrehbar mit den außermittigen Exzenterwellen verbunden, und sind gemeinsam mit diesen um die zentrale Achse drehbar angeordnet. Die außermittigen Exzenterwellen bilden zugleich die Transformationsmittel.

Beispiele für entsprechende Getriebe und für diese geeignete Lageranordnungen sind in WO 2019/096723 A1 beschrieben.

Nachteilig sowohl an Zykloidgetrieben, als auch an der Kombination von Zykloid- und Planetengetriebe in einem mehrstufigen Getriebe ist der hohe Montageaufwand. Dieser ist einerseits bedingt durch den Aufwand zum Zusammenfügen der Wälzkörper und Separatoren umfassenden Lagerelemente zwischen die relativ zueinander drehbaren Lagerorgane Hohlkörper und gegenüber diesem um die Hohlkörperachse drehbarem Drehkörper. Zur Aufnahme eines Wälzlagerrings ist ein Lagernutpaar vorgesehen. Das Lagernutpaar umfasst jeweils eine Lagernut in dem einen Lagerorgan - dem Hohlkörper - und eine dieser gegenüberliegend zugeordnete Lagernut in dem anderen Lagerorgan - dem Drehkörper. Zeitgleich müssen die im Hohlkörper sowie am Drehkörper darüber hinaus untergebrachten Funktionsteile der jeweiligen Getriebe eingebracht werden. Erschwert wird dies andererseits durch die insgesamt engen Platzverhältnisse der kompakt zu bauenden Getriebe. Außerdem ist die Belastbarkeit der im Hinblick auf einen vertretbaren Montageaufwand optimierten Lageranordnung beschränkt.

Die Momentenbelastbarkeit der Lageranordnung zwischen Hohlkörper und Drehkörper ist insbesondere aufgrund der im Hinblick auf eine vertretbaren Montagefreundlichkeit einreihigen Lagergestaltung als Kreuzrollenlager mit nur einem Wälzlagerring zwischen Hohlkörper und Drehkörper beschränkt.

Bei einer zweireihigen Lageranordnung mit zwei entlang der Hohlkörperachse voneinander beabstandeten Wälzlagerringen nach dem Stand der Technik müssen die Wälzkörper und Separatoren umfassenden Wälzlagerelemente der Wälzlagerringe aufwändig Stück für Stück in korrekter, gegebenenfalls abwechselnder Ausrichtung durch in die zur Aufnahme der Wälzlagerringe vorgesehenen Lagernutpaare zwischen Hohlkörper und Drehkörper führende Beschickungslöcher eingebracht werden. Dies ist zeitaufwändig und fehleranfällig. Darüber hinaus müssen die Beschickungslöcher anschließend in einem eigenen Arbeitsschritt verschlossen werden. Nachträgliche Korrekturen erfordern eine Demontage unter Entnahme der Lagerelemente durch die Beschickungslöcher heraus. Dies geht mit noch größerem Zeitaufwand einher, als schon zur Montage nötig.

Ein mit den insgesamt engen Platzverhältnissen des kompakt zu bauenden Getriebes einhergehender Nachteil insbesondere eines Zykloidgetriebes mit außermittigen Exzenterwellen ist die eingeschränkte Belastbarkeit der die drehbare Anordnung der außermittigen Exzenterwellen am Drehkörper besorgenden Lageranordnungen. Aufgrund mit größer werdendem Wellendurchmesser zunehmender Belastbarkeit von Lageranordnungen ist dies zwischen Drehkörper und außermittigen Exzenterwellen wesentlich kritischer als bei den zwischen deren exzentrischen Abschnitten und den die außermittigen Öffnungen der Zykloidenscheiben begrenzenden Wandungen angeordneten Lageranordnungen. Dies wird dadurch besonders erschwert, dass zum Erhalt möglichst geringer Reibungsverluste der Einsatz von Wälzlagern im gesamten Getriebe bevorzugt ist.

Der Vollständigkeit halber sei erwähnt, dass eine höhere Belastbarkeit auch bezüglich der Lageranordnung zwischen exzentrischen Abschnitten einer zentralen Exzenterwelle und mit ihrer zentralen Öffnung auf einem solchen Abschnitt drehbar angeordneter Zykloidenscheibe wünschenswert wäre.

Eine Aufgabe der Erfindung ist der Erhalt einer höheren Belastbarkeit einer Lageranordnung für ein kompakt zu bauendes Getriebe sowie der Erhalt einer höheren Belastbarkeit eines kompakt zu bauenden Getriebes insgesamt unter gleichzeitiger Wahrung dessen vorteilhafter Eigenschaften, dies zumindest unter Beibehaltung eines vertretbaren Montageaufwands, vorzugsweise jedoch unter verringertem Montageaufwand.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach ein Getriebe mit einem Hohlkörper mit einer Hohlkörperachse und einem um die Hohlkörperachse drehbar gelagerten Drehkörper. Mindestens eine Zykloidenscheibe wälzt in dem Hohlkörper ab. Die Zykloidenscheibe weist mindestens eine außermittige Öffnung auf. Das Getriebe weist eine oder mehrere jeweils an einem sich entlang einer Fortsatzachse parallel zur Hohlkörperachse erstreckenden kreiszylinderförmigen außermittigen Fortsatz des Drehkörpers gemeinsam um die Hohlkörperachse umlaufend drehbar angeordnete und gegenüber dem Drehkörper drehbar gelagerte außermittige Exzenterwellen mit einer der Anzahl der Zykloidenscheiben entsprechenden Zahl von exzentrischen Abschnitten auf. Mit den exzentrischen Abschnitten sind die außermittigen Exzenterwellen in jeweils einer außermittigen Öffnung der mindestens einen Zykloidenscheibe drehbar gelagert. Die außermittige Exzenterwellen weisen jeweils eine der Fortsatzachse des entsprechenden Fortsatzes, auf dem sie drehbar angeordnet sind, zugewandte innere Mantelfläche auf. Das Getriebe umfasst eine Lageranordnung mit dem außermittigen Fortsatz und der an diesem um die Fortsatzachse drehbar gelagerten außermittigen Exzenterwelle als Lagerorgane. Zwischen den Lagerorganen sind zwei Wälzlagerringe aus Wälzkörpern und gegebenenfalls Separatoren umfassenden Wälzlagerelementen angeordnet. Zwischen den Lagerorganen verbleibt ein Ringspalt.

Zumindest ein Abschnitt einer sich parallel zur Fortsatzachse erstreckenden, konzentrisch um diese angeordneten Fortsatzoberfläche ist als eine erste Wälzkörperlauffläche ausgebildet.

Auf der dem Fortsatz zugewandten inneren Mantelfläche der außermittigen Exzenterwelle ist ein radial nach innen, zur Fortsatzachse hin ragender Vorsprung ausgebildet.

Dieser dient der axialen Trennung oder Beabstandung der beiden Wälzlagerringe.

Die durch den Vorsprung voneinander getrennten Partien der inneren Mantelfläche sind als zweite Wälzkörperlaufflächen ausgebildet.

In axialer Richtung beidseitig des Vorsprungs ist jeweils ein Wälzlagerring der beiden Wälzlagerringe zwischen den jeweiligen ersten und zweiten Wälzkörperlaufflächen angeordnet, je ein Wälzlagerring auf jeder Seite des Vorsprungs.

In axialer Richtung gesehen beidseitig der Wälzlagerringe ist auf deren dem Vorsprung abgewandten Seiten jeweils ein die Wälzlagerelemente der Wälzlagerringe in ihren axialen Positionen auf den Wälzkörperlaufflächen haltender Stützring angeordnet, je ein Stützring auf jeder dem Vorsprung abgewandten Seite.

Die Stützringe überragen die Wälzkörperlaufflächen normal zur Fortsatzachse um ein Maß, welches ausreicht, die Wälzlagerelemente der Wälzlagerringe in axialer Position zu halten.

Die Stützringe ragen damit seitlich der Wälzlagerelemente der Wälzlagerringe zum Teil in den Ringspalt zwischen Fortsatz und außermittiger Exzenterwelle hinein, beispielsweise bis zur Hälfte.

Es ist ersichtlich, dass der Gegenstand der Erfindung alternativ durch eine Lageranordnung mit einem Fortsatz eines Drehkörpers und einer gegenüber diesem um eine Fortsatzachse drehbar angeordneten, außermittigen Exzenterwelle eines voranstehend beschriebenen, eine Zykloidgetriebestufe und eine Planetengetriebestufe umfassenden, mehrstufigen Getriebes verwirklicht sein kann.

Das Getriebe kann einzelne oder eine Kombination der zuvor und/oder nachfolgend in Verbindung mit einer Lageranordnung beschriebene Merkmale aufweisen, ebenso wie die Lageranordnung einzelne oder eine Kombination mehrerer zuvor und/oder nachfolgend in Verbindung mit dem Getriebe beschriebene Merkmale aufweisen und/oder verwirklichen kann.

Das Getriebe und/oder die Lageranordnung können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind ebenfalls nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1-G: ein Ausführungsbeispiel eines Getriebes 01 in einem entlang dessen zentraler Getriebeachse 10x verlaufenden Schnitt A-A gemäß Fig. 2-G.
- Fig. 2-G: das Getriebe 01 aus Fig. 1-G in einer Seitenansicht B-B gemäß Fig. 1-G (Eingangsseite).
- Fig. 3-G: das Getriebe 01 aus Fig. 1-G in einem Querschnitt C-C gemäß Fig. 1-G.
- Fig. 4-G: das Getriebe 01 aus Fig. 1-G in einer Seitenansicht D-D gemäß Fig. 1-G (Abtriebsseite).
- Fig. 5-G: das Detail A des Getriebes 01 aus Fig. 1-G.
- Fig. 6-G: eine perspektivische Explosionsdarstellung der Hohl-Drehkörper-Lageranordnung des Getriebes 01 aus Fig. 1-G (gemäß Detail A im in Fig. 1-G gezeigten Querschnitt A-A durch das Getriebe 01).
- Fig. 7-G: eine perspektivische Explosionsdarstellung des Details B des Getriebes 01 aus Fig. 1-G.
- Fig. 8-G: eine schrittweise Abfolge des Zusammenbaus der Hohl-Drehkörper-Lageranordnung aus Fig. 6-G in Querschnittsdarstellung.
- Fig. 9-G: ein Ausführungsbeispiel eines als Hohlwellengetriebe mit Hohl-Drehkörper-Lageranordnung ausgeführten Getriebes 01.1 in einem entlang dessen mit einer Hohlkörperachse 2x übereinstimmender zentraler Getriebeachse 10x verlaufenden Schnitt A-A gemäß Fig. 12-G.
- Fig. 10-G: das Getriebe 01.1 aus Fig. 9-G in einem Querschnitt C-C gemäß Fig. 9-G.
- Fig. 11-G: das Getriebe 01.1 aus Fig. 9-G in einem Querschnitt D-D gemäß Fig. 9-G.
- Fig. 12-G: das Getriebe 01.1 aus Fig. 9-G in einer Seitenansicht E-E gemäß Fig. 9-G (Abtriebsseite).
- Fig. 13-G: das Detail A des Getriebes 01.1 aus Fig. 9-G.
- Fig. 14-G: eine perspektivische Explosionsdarstellung der Hohl-Drehkörper-Lageranordnung des Getriebes 01.1 aus Fig. 9-G (gemäß Detail A im in Fig. 9-G gezeigten Querschnitt A-A durch das Getriebe 01.1).
- Fig. 15-G: eine schrittweise Abfolge des Zusammenbaus der Hohl-Drehkörper-Lageranordnung aus Fig. 14-G in Querschnittsdarstellung.
- Fig. 16-G: Varianten einer Lagerung des Stirnrads 30 und des Sonnenrads 28 des Getriebes aus Fig. 9-G. Durch die Varianten kann auf das in Fig. 9-G dargestellte Lager 31 verzichtet werden. Es zeigen: Fig. 16-G a) eine Variante unter Verwendung eines Vierpunktkontaktkugellagers 33, Fig. 16-G b) eine Variante unter Verwendung eines zweireihigen Schrägkugellagers 34, und Fig. 16-G c) eine Variante unter Verwendung eines Lagers mit gekreuzten Rollen (Crossed Roller Bearing / Kreuzrollenlager) oder mit gekreuzten Kegeln 35.
- Fig. 17-G: ein Ausführungsbeispiel eines ebenfalls als Hohlwellengetriebe, jedoch ohne eine in Fig. 6-G oder Fig. 14-G gezeigte Hohl-Drehkörper-Lageranordnung ausgeführten Getriebes 01.2.
- Fig. 18-G: ein Ausführungsbeispiel eines ohne eine in Fig. 6-G oder Fig. 14-G gezeigte Hohl-Drehkörper-Lageranordnung ausgeführten Getriebes 01.3.

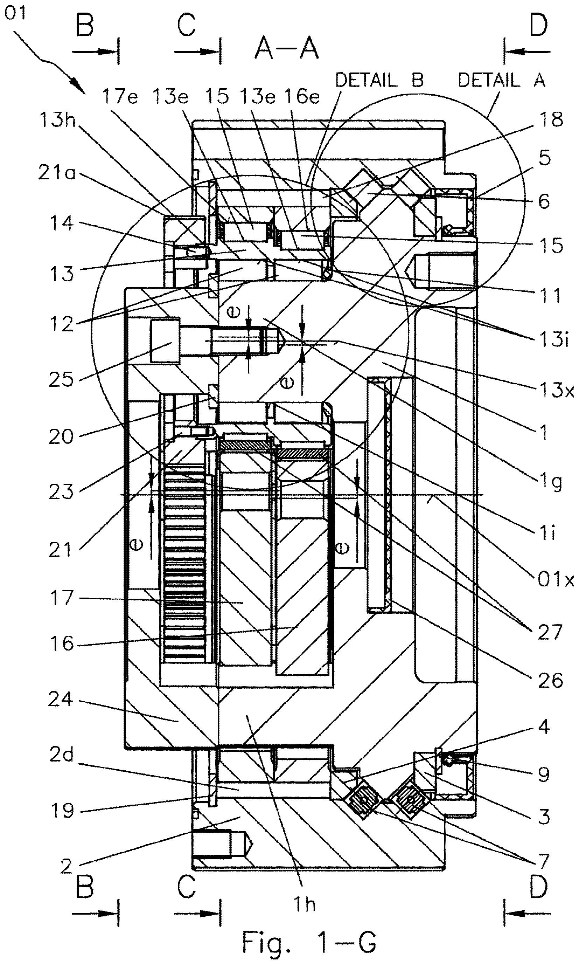

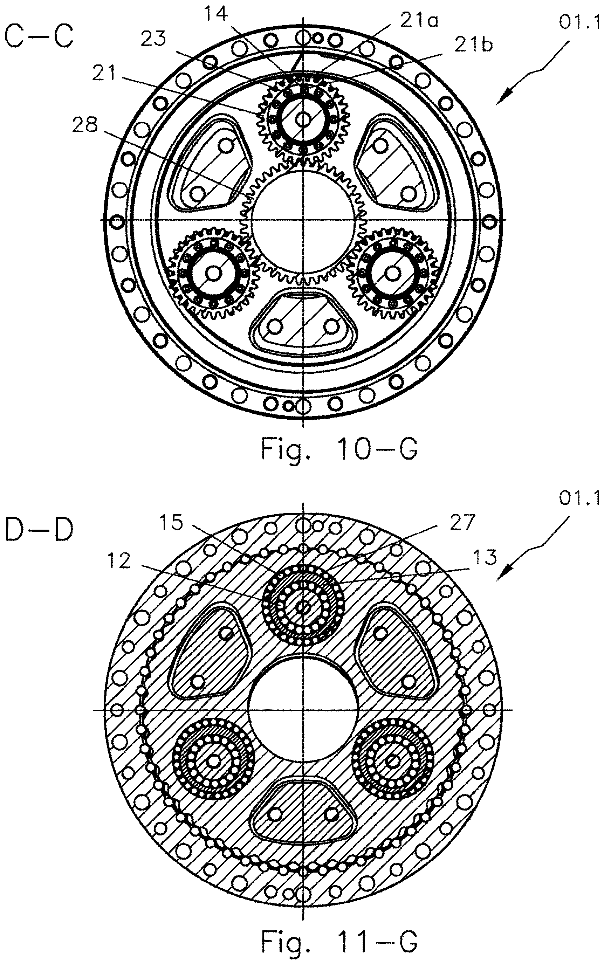

Ein in Fig. 1-G, Fig. 2-G, Fig. 3-G, Fig. 4-G, Fig. 5-G, Fig. 6-G, Fig. 7-G, Fig. 8-G, Fig. 9-G, Fig. 10-G, Fig. 11-G, Fig. 12-G, Fig. 13-G, Fig. 14-G, Fig. 15-G, Fig. 16-G, Fig. 17-G, Fig. 18-G ganz oder in Teilen dargestelltes Getriebe 01, 01.1, 01.2, 01.3 umfasst:
- einen Hohlkörper 2 mit einer Hohlkörperachse 2x,
- mindestens eine in dem Hohlkörper 2 abwälzende Zykloidenscheibe 16, 17 mit mindestens einer außermittigen Öffnung,
- einen um die Hohlkörperachse 2x drehbar gelagerten Drehkörper 1 mit mindestens einem außermittigen Fortsatz 1g,
- mindestens eine um eine Fortsatzachse 13x drehbar angeordnete außermittige Exzenterwelle 13 mit einer der Anzahl der Zykloidenscheiben 16, 17 entsprechenden Zahl von exzentrischen Abschnitten 13e, und
- eine auch als Fortsatz-Exzenterwelle-Lageranordnung bezeichnete Lageranordnung mit dem außermittigen Fortsatz 1g und der an diesem um die Fortsatzachse 13x drehbar gelagerten außermittigen Exzenterwelle 13, zwischen denen zwei Wälzlagerringe angeordnet sind.

Der Drehkörper 1 weist eine der Zahl von außermittigen Exzenterwellen 13 entsprechende Anzahl von sich jeweils entlang einer Fortsatzachse 13x parallel zur Hohlkörperachse 2x erstreckenden kreiszylinderförmigen außermittigen Fortsätzen 1g auf.

An jedem außermittigen Fortsatz 1g des Drehkörpers 1 ist eine außermittige Exzenterwelle 13 um die Fortsatzachse 13x drehbar angeordnet (Rotation).

Dreht sich der gegenüber dem Hohlkörper drehbar angeordnete Drehkörper 1 um die Hohlkörperachse 2x, so laufen die außermittigen Exzenterwellen 13 gemeinsam mit den außermittigen Fortsätzen 1g, auf denen sie angeordnet sind, um die Hohlkörperachse 2x um (Revolution).

Mit ihren exzentrischen Abschnitten 13e sind die außermittigen Exzenterwellen 13 in jeweils einer außermittigen Öffnung der Zykloidenscheiben 16, 17 drehbar gelagert.

Jede der außermittigen Exzenterwellen 13 weist eine der Fortsatzachse 13x des jeweiligen Fortsatzes 1g, gegenüber dem sie drehbar angeordnet ist, zugewandte innere Mantelfläche auf.

Mit anderen Worten umfasst ein Getriebe 01, 01.1, 01.2, 01.3 mit:
- einem Hohlkörper 2 mit einer Hohlkörperachse 2x,
- mindestens einer in diesem abwälzenden Zykloidenscheibe 16, 17 mit mindestens einer außermittigen Öffnung,
- einem um die Hohlkörperachse 2x drehbar gelagerten Drehkörper 1, und
- einer oder mehreren außermittigen Exzenterwellen 13, welche
   a) jeweils an einem sich entlang einer Fortsatzachse 13x parallel zur Hohlkörperachse 2x erstreckenden kreiszylinderförmigen außermittigen Fortsatz 1g des Drehkörpers 1 gemeinsam um die Hohlkörperachse 2x umlaufend drehbar angeordnet sind,
   b) gegenüber dem Drehkörper 1 drehbar gelagert sind,
   c) eine der Anzahl der Zykloidenscheiben 16, 17 entsprechenden Zahl von exzentrischen Abschnitten 13e aufweisen,
   d) mit jedem ihrer exzentrischen Abschnitte 13e in jeweils einer außermittigen Öffnung der mindestens einen Zykloidenscheibe 16, 17 drehbar gelagert sind, und
   e) eine der Fortsatzachse (13x) zugewandte innere Mantelfläche aufweisen,
die Fortsatz-Exzenterwelle-Lageranordnung mit dem außermittigen Fortsatz 1g und der an diesem um die Fortsatzachse 13x drehbar gelagerten außermittigen Exzenterwelle 13, zwischen denen zwei Wälzlagerringe angeordnet sind.

Bei dieser Fortsatz-Exzenterwelle-Lageranordnung ist zumindest ein Abschnitt einer sich parallel zur Fortsatzachse 13x erstreckenden, konzentrisch um diese angeordneten Fortsatzoberfläche als eine erste Wälzkörperlauffläche 1i ausgebildet.

Bei dieser Fortsatz-Exzenterwelle-Lageranordnung ist außerdem in axialer Richtung entlang der Fortsatzachse 13x gesehen, entlang der dem Fortsatz 1g zugewandten, inneren Mantelfläche, beispielsweise auf der dem Fortsatz 1g zugewandten inneren Mantelfläche, ein radial nach innen, zur Fortsatzachse 13x hin ragender, axialer Trennsteg ausgebildet.

Bei dieser Fortsatz-Exzenterwelle-Lageranordnung sind zumindest die durch den Trennsteg voneinander axial getrennten Partien der inneren Mantelfläche als zweite Wälzkörperlaufflächen 13i ausgebildet sind,

Bei dieser Fortsatz-Exzenterwelle-Lageranordnung ist ferner in axialer Richtung beidseitig des Trennstegs jeweils ein Wälzlagerring der beiden Wälzlagerringe zwischen den jeweiligen ersten und zweiten Wälzkörperlaufflächen 1i, 13i angeordnet. Dabei handelt es sich um je einen Wälzlagerring auf jeder Seite des Trennstegs.

Bei dieser Fortsatz-Exzenterwelle-Lageranordnung ist darüber hinaus in axialer Richtung beidseitig der Wälzlagerringe jeweils ein die Wälzlagerringe in ihren (entlang der Fortsatzachse 13x gesenen) axialen Positionen auf den Wälzkörperlaufflächen 1i, 13i haltender Stützring 11, 20 angeordnet. Dabei handelt es sich um je einen Stützring 11, 20 auf jeder dem Trennsteg abgewandten Seite der beiden Wälzlagerringe.

Bei dieser Fortsatz-Exzenterwelle-Lageranordnung überragen die Stützringe 11, 20 zumindest eine der Wälzkörperlaufflächen 1i, 13i normal zur Fortsatzachse 13x um ein Maß, welches ausreicht, die Wälzlagerringe in axialer Position zu halten.

Vorteile gegenüber dem Stand der Technik ergeben sich derart, dass auf den Fortsätzen 1g des Drehkörpers 1 direkt integrierte Wälzkörperlaufflächen 1i vorhanden sind, entlang denen die Wälzkörper 12 abrollen. Um eine maximale Belastbarkeit dieser Fortsatz-Exzenterwellen-Lageranordnung zu erreichen, wird vorteilhaft auf Lagerkäfige und/oder benachbarte Wälzkörper 12 voneinander getrennt haltende Separatoren verzichtet. Die außermittigen Exzenterwellen 13 weisen ebenfalls integrierte Wälzkörperlaufflächen 13i auf. Zwischen den Wälzkörperlaufflächen 1i an den Fortsätzen 1g des Drehkörpers 1 und den Wälzkörperlaufflächen 13i an den Innenumfängen der außermittigen Exzenterwellen 13 rollen die Wälzkörper 12 direkt ab.

Zusätzlich wird ein radialer Raum zum Erhöhen des Durchmessers der Fortsätze 1g des Drehkörpers 1 erhalten, der gleichzeitig einer Erhöhung der Tragfähigkeit des jeweiligen Getriebes 01, 01.1, 01.2, 01.3 beiträgt.

Durch Schaffung eines vergrößerten radialen Raums kann eine adäquate Vergrößerung und Verstärkung der Lager 37 vorgenommen werden, in denen die beispielsweise als zentrale Antriebswelle dienende zentrale Exzenterwelle 36 sitzt, sowie eine Vergrößerung und Verstärkung der vollintegrierten Wälzlager bestehend aus auf den exzentrischen Abschnitten 36f integrierten Wälzkörperlaufflächen, darauf abrollenden Wälzkörpern 15 und Wälzkörperlaufflächen 16f und 17f am Innenumfang der zentralen Öffnungen der Zykloidenscheiben 16, 17.

Wichtig ist hervorzuheben, dass der Trennsteg durch einen Vorsprung der inneren Mantelfläche der außermittigen Exzenterwelle 13, oder alternativ oder zusätzlich durch einen Trennring verwirklicht sein kann.

Grundsätzlich muss der Trennsteg nicht zwingend an der außermittigen Exzenterwelle 13 angeordnet sein. Er kann auch am Fortsatz 1g angeordnet sein, beispielsweise als ein den Fortsatz an dessen als Wälzkörperlauffläche 1i berührender Trennring.

Alternativ ist denkbar, den Trennring schwimmend zwischen den Wälzkörperlaufflächen 1i, 13i am Fortsatz 1g und der außermittigen Exzenterwelle 13 auszubilden.

Fig. 1-G bis Fig. 18-G zeigen ganz oder in Teilen Getriebe 01, 01.1, 01.2, 01.3, die auch als mehrstufige Getriebe mit einer Zykloidgetriebestufe und einer Planetengetriebestufe ausgeführt sein können. Die Zykloidgetriebestufe umfasst einen Hohlkörper 2 mit einer Hohlkörperachse 2x. Diese bildet eine zentrale Getriebeachse 10x der Zykloidgetriebestufe und der Planetengetriebestufe beziehungsweise stimmt mit dieser überein. Bezugnehmend auf die Planetengetriebestufe kann die durch die Hohlkörperachse 2x gebildete beziehungsweise mit dieser übereinstimmende zentrale Getriebeachse 10x auch als Revolutionsachse bezeichnet werden. Die Zykloidgetriebestufe umfasst außerdem:
- einen um die zentrale Getriebeachse 10x drehbar am oder im Hohlkörper 2 gelagerten Drehkörper 1 mit mindestens einem sich entlang einer Fortsatzachse (13x) parallel zur Hohlkörperachse 2x erstreckenden kreiszylinderförmigen außermittigen Fortsatz (1g),
- mindestens eine in dem Hohlkörper 2 abwälzende Zykloidenscheibe 16, 17 mit mindestens einer der Anzahl der außermittigen Fortsätze 1g des Drehkörpers 1 entsprechenden Zahl von außermittigen Öffnungen, sowie
- eine der Anzahl der außermittigen Fortsätze 1g des Drehkörpers 1 entsprechende Zahl von jeweils an einem außermittigen Fortsatz 1g des Drehkörpers 1 drehbar gelagerten, hohlzylinderartigen, außermittigen Exzenterwellen 13 mit einer äußeren Mantelfläche mit einer der Anzahl der Zykloidenscheiben entsprechenden Zahl von jeweils in einer außermittigen Öffnung der Zykloidenscheiben 16, 17 drehbar gelagerten exzentrischen Abschnitten 13e und mit einer die Fortsatzachse 13x konzentrisch umgebenden inneren Mantelfläche. Auf den inneren Mantelflächen der außermittigen Exzenterwellen 13 sind vorteilhaft Wälzkörperlaufflächen 13i ausgebildet.

Die Planetengetriebestufe umfasst ein zentrales Sonnenrad 28 mit einer Sonnenradverzahnung 28a und je außermittige Exzenterwelle 13 ein unverdrehbar mit dieser verbundenes und gemeinsam mit dieser um die zentrale Getriebeachse 10x drehbar angeordnetes Planetenrad 21 mit einer mit der Sonnenradverzahnung 28a kämmenden Planetenradverzahnung 21a.

Jede Fortsatzachse 13x kann auch als eine Rotationsachse der Planetenräder 21 bezeichnet werden. Jedes der Planetenräder 21 dreht sich während seines Umlaufs um das Sonnenrad 28 um seine Rotationsachse. Währenddessen laufen alle Planetenräder 21 gemeinsam um die Revolutionsachse um das Sonnenrad 28 um.

Die außermittigen Exzenterwellen 13 können vorteilhaft zugleich die Transformationsmittel zur Umwandlung der Bewegungen der einen oder mehreren Zykloidenscheiben 16, 17 bei deren Abwälzung im Hohlkörper 2 oder in einem unverdrehbar mit dem Hohlkörper verbundenen Getriebegehäuse 10 in eine Rotationsbewegung des Drehkörpers 1 bilden.

Hierbei handelt es sich um ein mehrstufiges Getriebe, welches ein eine erste Getriebestufe bildendes Zykloidgetriebe und ein eine zweite Getriebestufe bildendes Planetengetriebe kombiniert. Hierbei dienen die Bezeichnungen erste und zweite Getriebestufe lediglich der Unterscheidung und stellen keine vorgegebene Reihenfolge dar. Unter anderem ist dies auch dadurch begründet, dass weder Zykloidgetriebe noch Planetengetriebe selbsthemmend sind. Dementsprechend können deren beispielsweise durch Wellen gebildete Eingangs- und Ausgangsorgane in dem Sinne vertauscht werden, dass sie sowohl von der einen als auch von der anderen Welle her ohne zu blockieren antreibbar sind.

Die Getriebe 01, 01.1, 01.2, 01.3 zeichnen sich aus durch eine Lageranordnung mit zwei relativ zueinander drehbar angeordneten Lagerorganen. Insbesondere handelt es sich dabei um eine Zylinderwälzkörperlageranordnung. Bei den relativ zueinander drehbar angeordneten Lagerorganen der als Fortsatz-Exzenterwelle-Lageranordnung bezeichneten Lageranordnung handelt es sich um den kreiszylinderförmigen außermittigen Fortsatz 1g mit einer als Rotationsachse bezeichneten, durch seine Zylinderachse gebildeten, sich parallel zur Hohlkörperachse 2x erstreckenden Fortsatzachse 13x und eine an dem Fortsatz 1g um die Fortsatzachse 13x drehbar gelagerte außermittige Exzenterwelle 13. Zwischen den Lagerorganen sind zwei Wälzlagerringe angeordnet. Jeder Wälzlagerring besteht bevorzugt aus beispielsweise abwechselnd Wälzkörper 6 und Separatoren 7 umfassenden Wälzlagerelementen. Zwischen den beiden Lagerorganen verbleibt ein Ringspalt.

Vorteilhaft sind die Wälzlagerringe der Fortsatz-Exzenterwelle-Lageranordnungen der Getriebe 01, 01.1, 01.2, 01.3 frei von Separatoren 7 ausgeführt. Sie umfassen bevorzugt nur Wälzkörper 12.

Zumindest ein Abschnitt einer sich parallel zur Fortsatzachse 13x erstreckenden Fortsatzoberfläche ist als eine erste Wälzkörperlauffläche 1i ausgebildet.

Zwischen der mit den ersten Wälzkörperlauffläche 1i versehenen und sich parallel zur Fortsatzachse 13x erstreckenden Fortsatzoberfläche am Außenumfang des Fortsatzes 1g und der inneren Mantelfläche der außermittigen Exzenterwelle 13 ist ein als Vorsprung bezeichneter, radialer Trennsteg angeordnet.

Beispielsweise ist auf der dem Fortsatz 1g zugewandten inneren Mantelfläche der Exzenterwelle 13 ein radial nach innen, zur Fortsatzachse 13x hin ragender Vorsprung ausgebildet.

Die durch den Vorsprung voneinander getrennten Partien der inneren Mantelfläche der außermittigen Exzenterwelle 13 sind als zweite Wälzkörperlaufflächen 13i ausgebildet.

In axialer Richtung beidseitig des Vorsprungs ist jeweils ein Wälzlagerring der beiden Wälzlagerringe zwischen den jeweiligen ersten und zweiten Wälzkörperlaufflächen 1i, 13i angeordnet, je ein Wälzlagerring auf jeder Seite.

In axialer Richtung beidseitig der Wälzlagerringe auf deren dem Vorsprung abgewandten Seiten ist jeweils ein die Wälzlagerelemente der Wälzlagerringe in ihren Positionen auf den Wälzkörperlaufflächen haltender Stützring 11, 20 angeordnet, je ein Stützring 11, 20 auf jeder dem Vorsprung abgewandten Seite der beiden Wälzlagerringe.

Die Stützringe 11, 20 überragen jeweils zumindest eine der Wälzkörperlaufflächen 1i, 13i normal zur Fortsatzachse 13x um ein Maß, welches ausreicht, die Wälzlagerelemente der Wälzlagerringe in axialer Position zu halten.

Die Stützringe 11, 20 ragen damit seitlich der Wälzlagerelemente der Wälzlagerringe zum Teil in den Ringspalt zwischen Fortsatz 1g und außermittiger Exzenterwelle 13 hinein, beispielsweise bis zur Hälfte.

Eine vorteilhafte Weiterbildung des Getriebes 01, 01.1, 01.2 sieht vor, dass es sich um ein mehrstufiges Getriebe mit einer Zykloid- und einer Planetengetriebestufe handelt. Bei einem solchen, beispielsweise in Fig. 1-G, Fig. 9-G und Fig. 17-G dargestellten Getriebe 01, 01.1, 01.2 sind gemeinsam mit den außermittigen Exzenterwellen 13 um die Fortsatzachsen 13x drehbare Planetenräder 21 unverdrehbar mit den außermittigen Exzenterwellen 13 verbunden. Die Planetenräder 21 laufen gemeinsam mit den außermittigen Exzenterwellen 13 um die Hohlkörperachse 2x um.

Die Wälzlagerringe der Fortsatz-Exzenterwelle-Lageranordnung mit dem außermittigen Fortsatz 1g und der an diesem um die Fortsatzachse 13x drehbar gelagerten außermittigen Exzenterwelle 13, zwischen denen die Wälzlagerringe angeordnet sind, können Wälzkörper 12 mit parallel zu den Fortsatzachsen 13x verlaufenden Wälzkörperachsen umfassen. Dies erlaubt eine einfache Montage. Die im Bereich dieser Lageranordnung auftretenden Axialkräfte können auf die zum Führen der Wälzkörper 12 entlang ihrer Wälzkörperlaufflächen 13i und 1i erforderlichen Kräfte begrenzt werden.

Vorteilhaft sind die Wälzlagerringe der als Fortsatz-Exzenterwelle-Lageranordnung bezeichneten Lageranordnung mit dem außermittigen Fortsatz 1g und der an diesem um die Fortsatzachse 13x drehbar gelagerten außermittigen Exzenterwelle 13, zwischen denen die Wälzlagerringe angeordnet sind, frei von Separatoren oder Käfigen ausgeführt.

Um die Montage insbesondere durch eine verbesserte Zugänglichkeit zu vereinfachen kann der Drehkörper 1 einseitig drehbar am Hohlkörper 2 oder an einem koaxial, beispielsweise stirnseitig des Hohlkörpers 2 angeordneten Getriebegehäuse 10 gelagert sein.

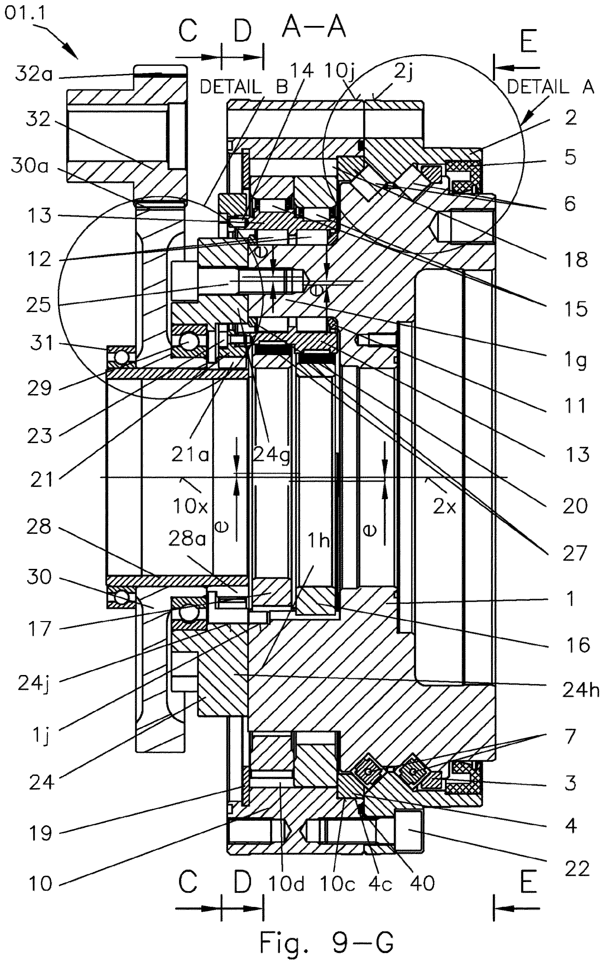

Das Getriebe 01.1, 01.3 kann eine zentrale Exzenterwelle 36 mit einer der Anzahl der Zykloidenscheiben 16, 17 entsprechenden Zahl von exzentrischen Abschnitten 36f aufweisen (Fig. 9-G bis Fig. 16-G, Fig. 18-G). Jeder der exzentrischen Abschnitte 36f der zentralen Exzenterwelle 36 ist in einer zentralen Öffnung genau einer Zykloidenscheibe 16, 17 drehbar gelagert.

Das Getriebe 01.1, 01.2, 01.3 umfasst jeweils eine als Zentrale-Exzenterwelle-Zykloidenscheibe-Lageranordnung bezeichnete Lageranordnung mit dem jeweiligen exzentrischen Abschnitt 36f und der jeweiligen Zykloidenscheibe 16, 17, zwischen denen jeweils mindestens ein Wälzlagerring angeordnet ist.

Jeder exzentrische Abschnitt 36f weist bei der Zentrale-Exzenterwelle-Zykloidenscheibe-Lageranordnung eine als erste Wälzkörperlauffläche ausgebildete, in axialer Richtung zu beiden Seiten hin durch einen radialen Vorsprung weg von der Hohlkörperachse 2x begrenzte kreisringförmige Außenfläche auf. Die zentrale Öffnung einer jeden Zykloidenscheibe 16, 17 weist bei der Zentrale-Exzenterwelle-Zykloidenscheibe-Lageranordnung in ihrem kleinsten Innendurchmesser eine als zweite Wälzkörperlauffläche 16f, 17f ausgebildete, kreisringförmige Innenfläche auf. Bei der Zentrale-Exzenterwelle-Zykloidenscheibe-Lageranordnung ist je ein zwischen den Vorsprüngen in axialer Richtung gesicherter Wälzlagerring zwischen den jeweiligen durch die exzentrischen Abschnitte 36f der der zentralen Exzenterwelle 36 gebildeten ersten Wälzkörperlaufflächen und zweiten Wälzkörperlaufflächen 16f, 17f angeordnet.

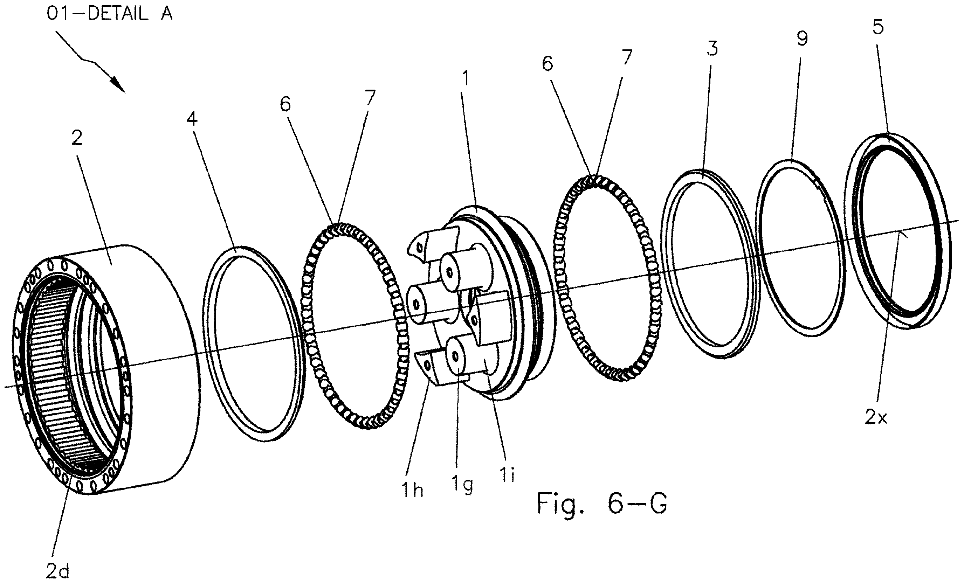

Das in Fig. 1-G bis Fig. 8-G gezeigte Getriebe 01 ist wie folgt aufgebaut:
Der Drehkörper 1 wird durch die geschaffenen Fortsätze 1g in Rotation um die Hohlkörperachse 2x angetrieben. Auf jedem Fortsatz 1g ist eine außermittige Exzenterwelle 13 um die Fortsatzachse 13x drehbar angeordnet. Gemeinsam mit den Fortsätzen 1g laufen die außermittigen Exzenterwellen 13 darüber hinaus um die Hohlradachse 2x um. An den Fortsätzen 1g sind erste Wälzkörperlaufflächen 1i ausgebildet (01-DETAIL B Fig.1-G, Fig.6-G). Am Innenumfang der außermittigen Exzenterwellen 13 sind gegenüberliegend den ersten Wälzkörperlaufflächen 1i zweite Wälzkörperlaufflächen 13i ausgebildet.

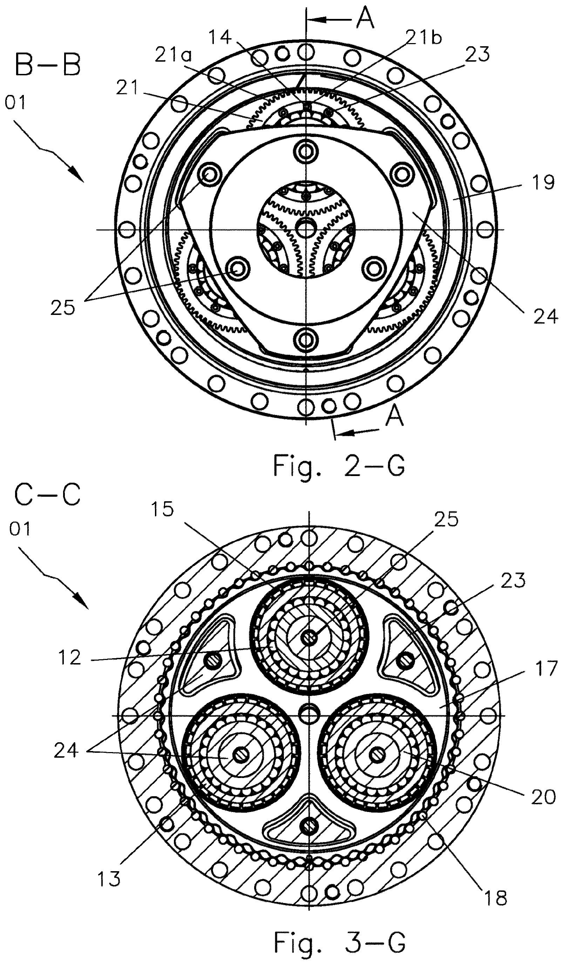

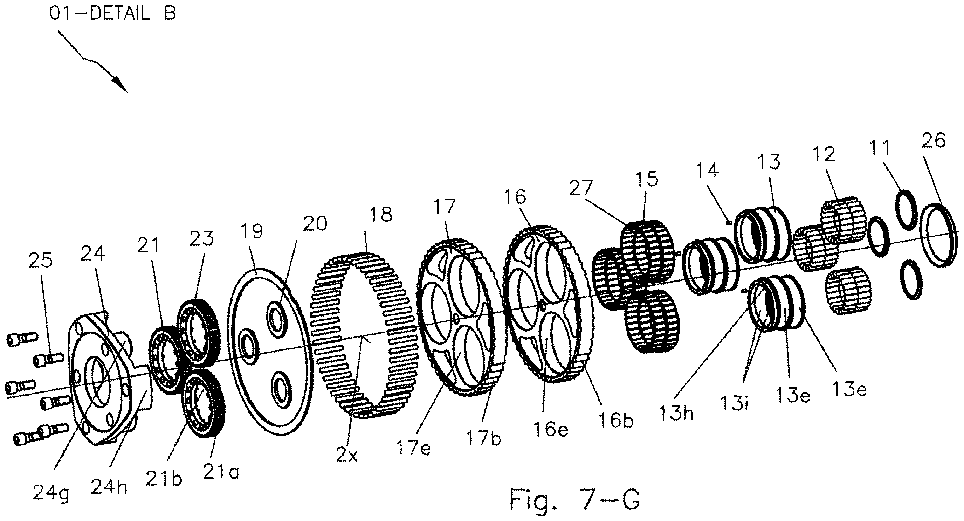

Die axiale Führung der auf diesen Wälzkörperlaufflächen 1i, 13i abwälzenden Wälzkörper 12 wird durch die beidseitig der Wälzkörper 12 innerhalb der der außermittigen Exzenterwellen 13 angeordneten Stützringe 11 und 20 gewährleistet. Eine axiale Beabstandung der in zwei axial benachbarten Wälzlagerringen angeordneten Wälzkörper 12 kann beispielsweise durch einen radial nach innen zum Fortsatz 1g ragenden Vorsprung zwischen den zweiten Wälzkörperlaufflächen 13i am Innenumfang der außermittigen Exzenterwellen 13 sichergestellt sein. Alternativ kann ein Distanz- oder Trennring zwischen den Wälzkörpern 12 der verschiedenen Wältlagerringe angeordnet sein. Jede außermittige Exzenterwelle 13 ist unverdrehbar mit einem Planetenrad 21 verbunden. Hierzu können die Planetenräder 21 beispielsweise mit Schrauben 23 an den außermittigen Exzenterwellen 13 befestigt sein. Darüber hinaus können die Planetenräder 21 stirnseitig mit Formen 21b versehen sein, die mit entsprechenden Formen an den außermittigen Exzenterwellen 13 korrespondieren und ein gegenseitiges Verdrehen unter einer Vorspannung der Planetenräder 21 gegen die außermittigen Exzenterwellen 13 verhindern (Fig. 2-G, Fig. 7-G).

Die außermittigen Exzenterwellen 13 werden durch die Planetenräder 21 angetrieben. Jede der außermittigen Exzenterwellen 13 hat jeweils zwei um 180° um deren jeweilige Rotationsachse gegeneinander verdrehte exzentrische Abschnitte 13e, die um eine Exzentrizität e gegenüber ihrer mit der Fortsatzachse 13x übereinstimmenden Rotationsachse versetzt sind (Fig. 1-G).

Jede außermittige Exzenterwelle 13 ist mit einem ihrer exzentrischen Abschnitte 13e in einer außermittigen Öffnung einer Zykloidenscheibe 16, 17 drehbar gelagert und mit dem verbleibenden exzentrischen Abschnitt 13e in einer außermittigen Öffnung der verbleibenden Zykloidenscheibe 17, 16. Am Außenumfang der beiden exzentrischen Abschnitte 13e sind Wälzlager angeordnet. Diese umfassen in Käfigen 27 angeordnete Wälzkörper 15. Diese Wälzlager sind wiederum in außermittigen Öffnungen der Zykloidenscheiben 16, 17 angeordnet.

Die Zykloidenscheiben 16, 17 wälzen am Innenumfang des Hohlkörpers 2 ab. Die Zykloidenscheiben 16, 17 können mit Außenverzahnungen 16b, 17b versehen sein. Diese können mit einer am Innenumfang des Hohlkörpers 2 angeordneten Innenverzahnung kämmen. Die Innenverzahnung am Hohlkörper 2 kann in Nuten 2d eingelegte Wälzkörper 18 umfassen.

Hiernach kann ein Getriebe 01 eine Außermittige-Exzenter-Zykloidenscheiben-Lageranordnung mit dem exzentrischen Abschnitt 13e und der gegenüber diesem drehbar angeordneten Zykloidenscheibe 16, 17 als Lagerorgane aufweisen. Die Außermittige-Exzenter-Zykloidenscheiben-Lageranordnung umfasst erste Wälzkörperlaufflächen am Außenumfang der exzentrischen Abschnitte 13e und zweite Wälzkörperlaufflächen 16e, 17e am Innenumfang der außermittigen Öffnungen der Zykloidenscheiben 16, 17 (Fig. 1-G, Fig. 7-G).

Zur Sicherstellung der axialen Position der Wälzkörper 18 und der Räder 17 und 16 dient einerseits der äußere Sicherungsring 19 im Hohlkörper 2 des Getriebes 01. Gegenüberliegend, nach innen hin kann der Stützring 4 die zusätzliche Funktion zur axialen Sicherung der als Innenverzahnung am Hohlkörper 2 dienenden Wälzkörper 18 übernehmen. Das Getriebe 01 kann zur vollständigen Abdichtung von der Seite des Drehkörpers 1 einen in den Drehkörper 1 eingesetzten Verschlussstopfen 26 aufweisen.

Im Gegensatz zum in Fig. 1-G bis Fig. 8-G dargestellten Getriebe 01, welches eine Hohl-Drehkörper-Lageranordnung mit am Außenumfang des Drehkörpers 1 angeordnetem, die beiden drehkörperseitigen Wälzkörperlaufflächen 1a tragendem Vorsprung aufweist, trägt der Vorsprung der Hohl-Drehkörper-Lageranordnung bei einem in Fig. 9-G bis Fig. 16-G dargestellten Getriebe 01.1 die beiden hohlkörperseitigen Wälzkörperlaufflächen 2a und ist am Innenumfang des Hohlkörpers 2 angeordnet.

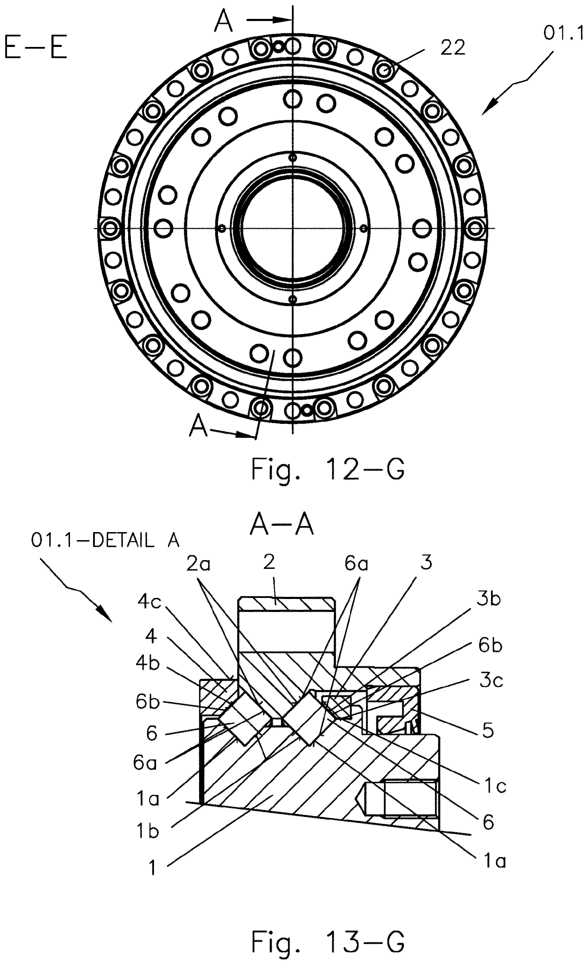

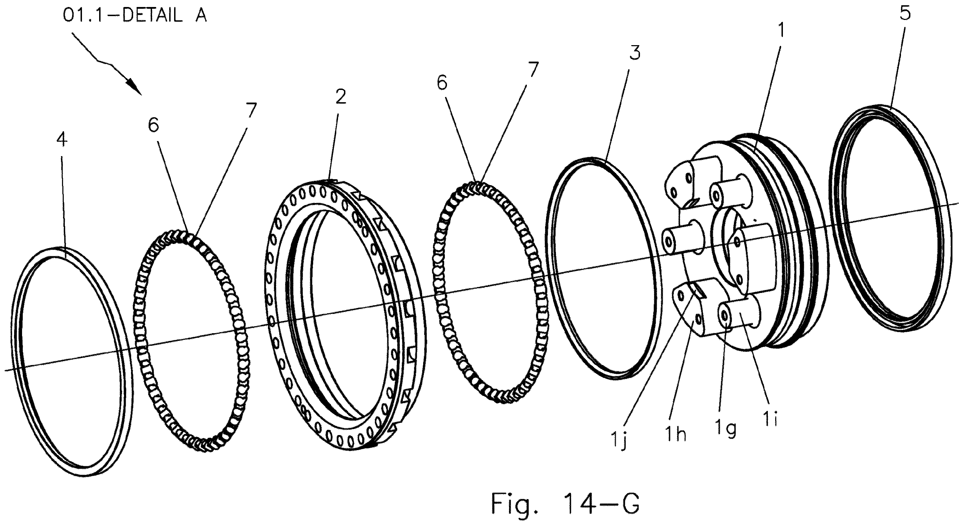

Das in Fig. 9-G bis Fig. 16-G dargestellte, als ein Hohlwellengetriebe ausgeführte Getriebe 01.1 weist damit ein integriertes ausgangsseitiges zweireihiges Wälzlager mit Schrägkontakt auf (01.1-DETAIL A aus Fig. 9-G in Fig. 13-G). Bei diesem Getriebe 01.1 erfüllt der Drehkörper 1 auch die Funktion des integrierten Innenrings des zweireihigen Abtriebswälzlagers mit Winkelkontakt (Detail in Schnitt A-A in Fig. 13-G gemäß Detail 01.1- DETAIL A aus Fig. 9-G und Fig. 14-G in 3D-Ansicht in Explosionsdarstellung). Der als Außenring dienende Hohlkörper 2 dieser Hohl-Drehkörper-Lageranordnung ist gegenüber dem Drehkörper 1 in zwei Reihen von Wälzkörpern 6 rollend gelagert. Zwischen den Wälzkörpern 6 sind Abstandshalter als Separatoren 7 auf dem als Innenring der Hohl-Drehkörper-Lageranordnung dienenden Drehkörper 1 angeordnet.

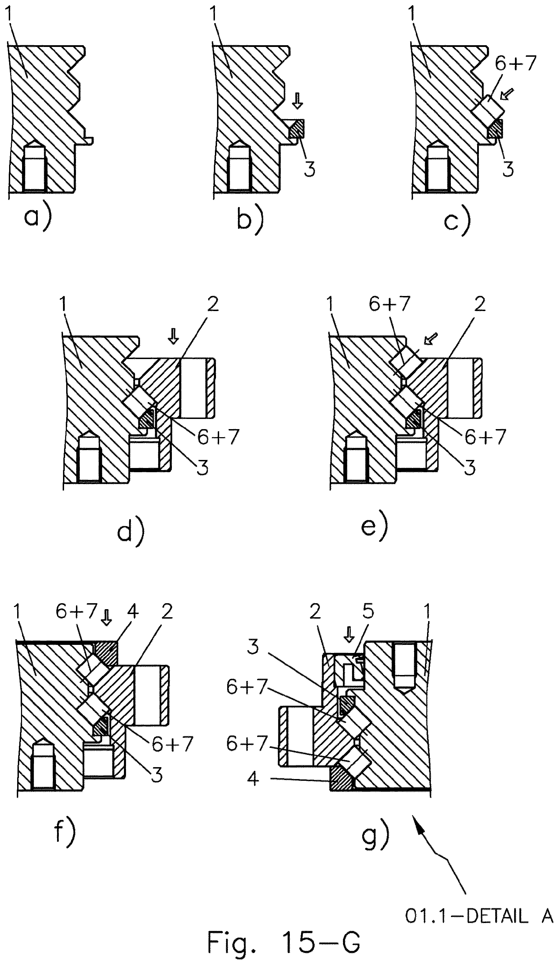

Unter 45° ausgebildete Stützflächen 1b am Innenring 1 dienen der Führung der Stirnflächen 6b der Wälzkörper 6. Diese auch als Abtriebslager bezeichnete Hohl-Drehkörper-Lageranordnung ist von besonderer Bauart gekennzeichnet durch zwei zusätzliche Stützringe 3, 4, die lediglich die Stirnflächen 6b der Wälzkörper 6 in einem 45°-Winkel mit ihren Stützflächen 3b und 4b führen. Daher müssen die Stützringe 3, 4 keine aufwändig herzustellende Oberflächen mit der Qualität eines Lagers aufweisen. Die Stützringe 3, 4 weisen nur Oberflächen auf, die keine Wälzkörperlaufflächen sind, sondern nur Stützflächen 3b und 4b. Diese müssen im Vergleich zu sonstigen Flächen nur mit erhöhter Oberflächenhärte ausgeführt werden. Im Vergleich zu Wälzkörperlaufflächen können sie in einer vernünftigerweise weniger anspruchsvollen Genauigkeit ausgeführt werden. Der die Funktion der Führung der Wälzkörper 6 übernehmende Stützring 4 wird mit der Fläche 4c auf die Halterung 10c des Getriebegehäuses 10 aufgesetzt (Fig. 9-G). Die Verwendung der Stützringe 3, 4 ermöglicht als einen wesentlichen Vorteil eine in Fig. 15-G a) bis g) Schritt für Schritt dargestellte, vereinfachte und optisch übersichtliche Montage der Wälzkörper 6 sowie gegebenenfalls beispielsweise als Trennstücke ausgeführten Separatoren 7 zwischen dem Drehkörper 1 und dem Hohlkörper 2, einschließlich des Einbaus einer Dichtung 5 zur Abdichtung des Getriebes 01.1 zwischen Drehkörper 1 und Hohlkörper 2.

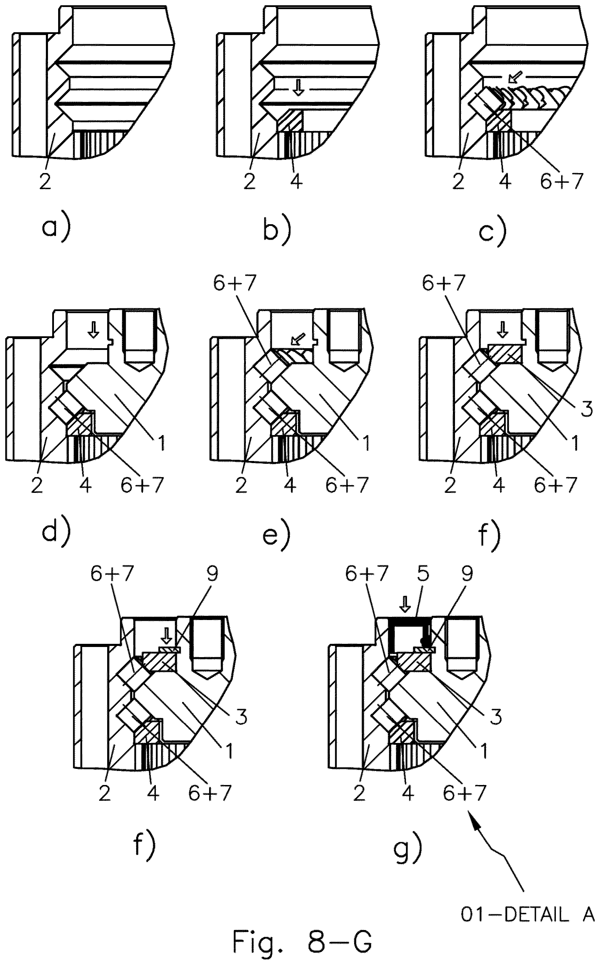

Der Vollständigkeit halber sei erwähnt, dass in Fig. 8-G a) bis g) eine Montage der Wälzkörper 6 sowie gegebenenfalls beispielsweise als Trennstücke ausgeführten Separatoren 7 zwischen dem Drehkörper 1 und dem Hohlkörper 2, einschließlich des Einbaus einer Dichtung 5 zwischen Drehkörper 1 und Hohlkörper 2 Schritt für Schritt für ein Getriebe 01 mit einer entsprechenden Hohl-Drehkörper-Lageranordnung dargestellt ist.

Zur Abdichtung kann im Verbindungsquerschnitt zwischen dem Getriebegehäuse 10 und dem Hohlkörper 2 stirnseitig ein O-Ring 40 angeordnet sein. Der Hohlkörper 2 und das Getriebegehäuse 10 können beispielsweise mit Schrauben 22 miteinander fest verbunden sein, nachdem sie in Übereinstimmung der Flächen 2j und 10j zueinander zentriert sind.

Der Untersetzungsmechanismus mit der Fortsatz-Exzenterwelle-Lageranordnung ist beim in Fig. 9-G bis Fig. 16-G gezeigten und als Hohlwellengetriebe oder Hohlwellenversion ausgeführten Getriebe 01.1 gleich wie beim in Fig. 1-G bis Fig. 8-G dargestellten Getriebe 01. Das in Fig. 9-G bis Fig. 16-G ganz oder in Teilen dargestellte, als Hohlwellengetriebe oder Hohlwellenversion ausgeführte Getriebe 01.1 weist ein hohles Sonnenrad 28 mit einer Außenverzahnung 28a auf. Das Sonnenrad 28 ist beim als Hohlwellengetriebe ausgeführten Getriebe 01.1 hohl. Die Außenverzahnung 28a des Sonnenrads 28 kämmt mit den Außenverzahnungen 21a der Planetenräder 21. Das Sonnenrad 28 kann einstückig mit einer Antriebshohlwelle als ein Antriebshohlrad ausgeführt sein. Ein Lager 29 im Flansch 24 dient der drehbaren Lagerung des Sonnenrads 28 um die Hohlkörperachse 2x.

Darüber hinaus kann das Sonnenrad 28 in einem Lager 31 gelagert sein, das beispielsweise entweder in einem Deckel zum Schließen des Getriebes 01.1, oder direkt in einem Körper einer mit einem entsprechend ausgebildeten Getriebe 01.1 ausgestatteten Vorrichtung, wie etwa einem Roboterarm, angeordnet sein kann.

Ein mit einer Verzahnung 30a versehenes großes Stirnrad 30 kann mit dem Sonnenrad 28 unverdrehbar verbunden sein. Über ein Ritzel 32 mit einer Verzahnung 32a kann das große Stirnrad 30 angetrieben sein. Hierzu kämmt die Verzahnung 32a des Ritzels 32 mit der Verzahnung 30a des großen Stirnrads 30. Der Flansch 24 und der Drehkörper 1 sind vorteilhaft gegenseitig durch die Durchmesser 24j und 1j Fig.9-G und Fig.14-G zentriert.

Der Flansch 24 kann mit dem Drehkörper 1 beispielsweise mit als Schrauben 25 ausgebildeten Verbindungsmitteln verbunden sein. Der Flansch 24 ist dabei bevorzugt an seinen Vorsprüngen 24g und 24h mit den Fortsätzen 1g und den Vorsprüngen 1h des Drehkörpers 1 verbunden (Fig.9-G, Fig. 14-G), insbesondere verschraubt. Der Flansch 24 und der Drehkörper 1 können so separat hergestellt werden, was dies vereinfacht. Auf den Fortsätzen 1g des Drehkörpers 1 befinden sich die Stützringe 11, 20, welche die axiale Führung der Wälzkörper 6 gewährleisten.

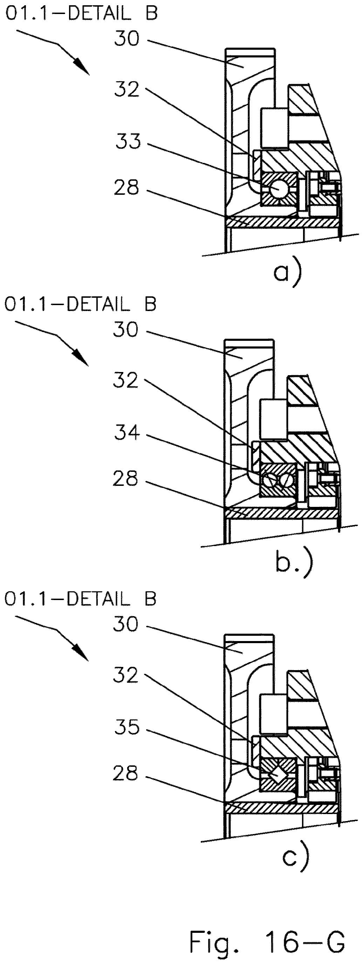

In Fig. 16-G sind Varianten einer Lagerung des Stirnrads 30 und des Sonnenrads 28 gezeigt. Durch die Varianten kann auf das in Fig. 9-G dargestellte Lager 31 verzichtet werden.

Fig. 16-G a) zeigt eine Variante unter Verwendung eines Vierpunktkontaktkugellagers 33.

Fig. 16-G b) zeigt eine Variante unter Verwendung eines zweireihigen Schrägkugellagers 34.

Fig. 16-G c) zeigt eine Variante unter Verwendung eines Lagers mit gekreuzten Rollen (Crossed Roller Bearing / Kreuzrollenlager) oder mit gekreuzten Kegeln 35.

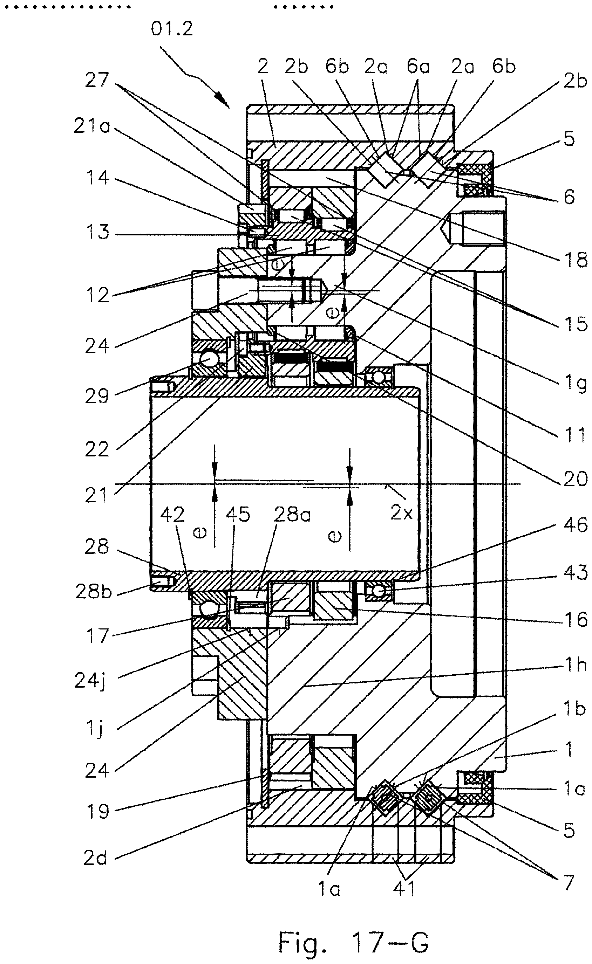

Fig. 17-G zeigt ein ebenfalls als Hohlwellengetriebe ausgeführtes Getriebe 01.2. Das Getriebe 01.2 weist zur Erhöhung der Belastbarkeit die bereits erwähnte Fortsatz-Exzenterwelle-Lageranordnung mit direkter Lagerintegration im Untersetzungsgetriebe auf.

Wesentliche Unterschiede des in Fig. 17-G dargestellten Getriebes 01.2 im Vergleich zum in Fig. 9-G gezeigten Getriebe 01.1 sind nachfolgend aufgezählt:
1.) Der Hohlkörper 2 erfüllt auch die Funktion des integrierten äußeren Lagerrings des abtriebsseitigen zweireihigen Schrägwälzlagers. Der äußere Lagerring dieses Lagers - hier der Hohlkörper 2 - ist in zwei Reihen von Wälzkörpern 6 rollend gelagert, zwischen denen sich beispielsweise als Trennstücke ausgeführte Separatoren 7 befinden können. Für die Rollflächen 6a der Wälzkörper 6 sind zwei in Bezug auf die Hohlkörperachse 2x unter entgegengesetzten Winkeln von 45° geneigte Wälzkörperlaufflächen 2a am Hohlkörper 2 und diesen gegenüberliegend am Drehkörper angeordnete Wälzkörperlaufflächen 1a. Unter einem Winkel von 45° entgegengesetzt geneigt ausgebildete Stützflächen 1b und 2b am einen inneren Lagerring bildenden Drehkörper 1 und am den äußeren Lagerring bildenden Hohlkörper 2 dienen der Führung der Stirnflächen 6b der Wälzkörper 6. Die Wälzkörper 6 und Trennstücke 7 werden zwischen die durch den Drehkörper 1 und den Hohlkörper 2 gebildeten inneren und äußeren Lagerringe durch die angedeuteten Beschickungslöcher 41 eingesetzt, die hierzu im den äußeren Lagerring bildenden Hohlkörper 2 geschaffen sind.
2.) Zur Sicherung der axialen Lage der Wälzkörper 18 und der Zykloidenscheiben 16, 17 dient einerseits der im Hohlkörper 2 ausgebildete Sicherungsring 19, andererseits wird die axiale Lage durch den Drehkörper 1 gesichert.
3.) Das hohle Sonnenrad 28 ist einerseits am Flansch 24 über ein Lager 29 und andererseits im Drehkörper 1 über ein Lager 43 drehbar gelagert. Die axiale Position des Lagers 29 ist definiert durch Sicherungsring 42 am Sonnenrad 28 und durch den Sicherungsring 45 im Flansch 24. Die axiale Position des Lagers 43 wird durch den Sicherungsring 46 am Sonnenrad 28 gesichert.
4.) Das hohle Sonnenrad 28 kann antriebsseitig ausgebildete Gewinde 28b aufweisen, durch die es beispielsweise mit einer Antriebswelle oder einem Stirnrad, oder einer Riemenscheibe, oder einer Welle, beispielsweise einer Hohlwelle eines Antriebsmotors, unverdrehbar verbunden werden kann, beispielsweise direkt in der Gerätekonstruktion dort, wo das Getriebe 01.2 eingebaut ist.

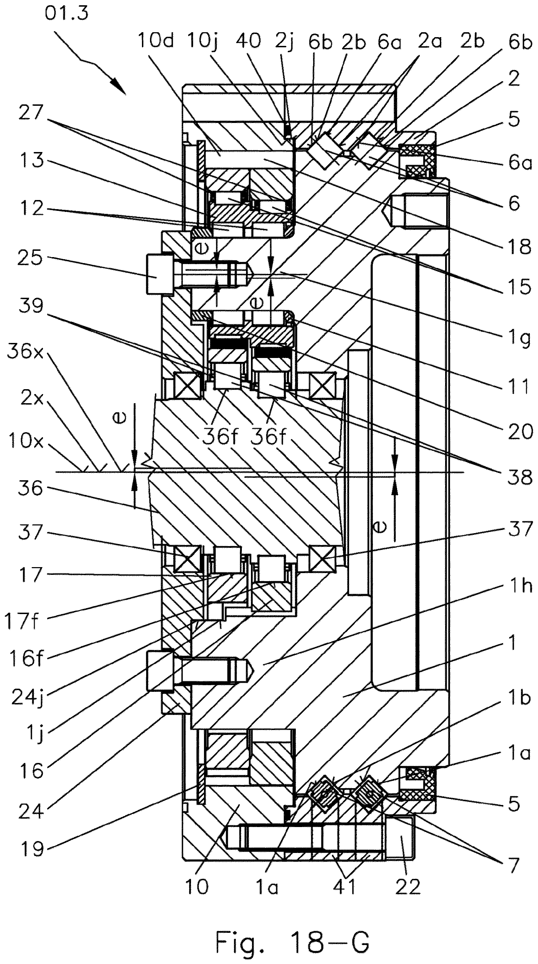

Fig. 18-G zeigt ein Getriebe 01.3.

Das Getriebe 01.3 weist zur Erhöhung der Belastbarkeit ebenfalls die bereits erwähnte Fortsatz-Exzenterwelle-Lageranordnung mit direkter Lagerintegration im Untersetzungsgetriebe auf.

Wesentliche Unterschiede des in Fig. 18-G dargestellten Getriebes 01.3 im Vergleich zu den in Fig. 1-G bis Fig. 8-G gezeigten Getrieben 01, den in Fig. 9-G bis Fig. 16-G gezeigten Getrieben 01.1 und zu dem in Fig. 17-G gezeigten Getriebe 01.2 sind nachfolgend aufgezählt:
Fig. 19-G
Fig. 20-G
Fig. 21-G
Fig. 22-G
Fig. 23-G
Fig. 24-G
Fig. 25-G
Fig. 26-G
Fig. 27-G
   1.) Das Getriebegehäuse 10 beziehungsweise die Verbindung zwischen dem Getriebegehäuse 10 und dem Hohlkörper 2 ist mit einem die Fläche 10j und die mit dieser korrespondierende Fläche 2j umfassenden Fitting ausgestattet. Das Getriebegehäuse 10 und der Hohlkörper 2 sind durch Verbindungsmittel, beispielsweise Schrauben 22 miteinander verbunden. Die Lagerung des Drehkörpers 1 im Hohlkörper ist wie beim in Fig. 17-G dargestellten Getriebe 01.2 ausgeführt. Es sind ebenso Beschickungslöcher 41 erforderlich und vorgesehen.
   2.) Zwischen dem Hohlkörper 2 und dem Getriebegehäuse 10 ist ein O-Ring 40 angeordnet.
   3.) Zur axialen Lagesicherung der am Innenumfang des Getriebegehäuses 10 als Innenverzahnung vorgesehenen Wälzkörper 18 und der Zykloidenscheiben 16, 17 ist ein Sicherungsring 19 einseitig in das Getriebegehäuse 10 eingesetzt. Auf der anderen Seite ist die axiale Position durch den Abtrieb vorgegeben.
   4.) Das Getriebe 01.3 wird über eine zentrale Exzenterwelle 36 mit einer der Anzahl der Zykloidenscheiben 16, 17 entsprechenden Zahl von exzentrischen Abschnitten 36f angetrieben. Die zentrale Exzenterwelle 36 ist mittels eines Lagers 37 um eine mit der zentralen Getriebeachse 10x übereinstimmende Zentralwellenachse 36x drehbar im Drehkörper 1 gelagert. Ein zusätzliches Lager 37 kann zwischen Flansch 24 und zentraler Exzenterwelle 36 vorgesehen sein. Die beiden gegenüber der Zentralwellenachse 36x um jeweils eine Exzentrizität e versetzten exzentrischen Abschnitte 36f sind um 180° gegeneinander verdreht angeordnet (phasenversetzt). Der Drehkörper 1 ist um seine ebenfalls mit der zentralen Getriebeachse 10x übereinstimmende Drehkörperachse 01x im Hohlkörper 2 drehbar gelagert. Auf jedem der exzentrischen Abschnitte 36f der zentralen Exzenterwelle 36 ist genau eine Zykloidenscheibe 16, 17 drehbar gelagert. Das Getriebe 01.3 kann eine Zentrale-Exzenterwelle-Zykloidenscheibe-Lageranordnung mit den exzentrischen Abschnitten 36f und den darauf mit ihren zentralen Öffnungen drehbar gelagerten Zykloidenscheiben 16, 17 als Lagerorgane umfassen. Die zylinderförmigen Oberflächen der exzentrischen Abschnitte 36f der zentralen Exzenterwelle 36 sind zumindest zum Teil als erste Wälzkörperlaufflächen ausgebildet. Die die zentralen Öffnungen der Zykloidenscheiben 16, 17 umgebenden Wandungen sind als zweite Wälzkörperlaufflächen 16f, 17f ausgebildet. Zwischen den ersten Wälzkörperlaufflächen der exzentrischen Abschnitte 36f und den zweiten Wälzkörperlaufflächen 16f, 17f der Zykloidenscheiben 16, 17 sind Rollen 38 angeordnet. Die Zykloidenscheiben 16, 17 greifen mit ihren Außenverzahnungen 16b und 17b (Fig. 7-G) in die Wälzkörper 18 ein, die sich in der Nut 10d des Getriebekörpers 10 befinden. Gleichzeitig sind die Zykloidenscheiben 16, 17 durch zwischen den in ihren außermittigen Öffnungen vorgesehenen zweiten Wälzkörperlaufflächen 16e und 17e und den exzentrischen Abschnitten 13e der außermittigen Exzenterwellen 13 angeordnete Wälzkörper 15 der Außermittige-Exzenter-Zykloidenscheiben-Lageranordnung drehbar gegenüber den außermittigen Exzenterwellen 13 gelagert. Diese sind mittels der Fortsatz-Exzenterwellen-Lageranordnung wiederum drehbar an den Fortsätzen 1g des Drehkörpers 1 angeordnet. Die Außermittige-Exzenter-Zykloidenscheiben-Lageranordnung in Verbindung mit der Fortsatz-Exzenterwellen-Lageranordnung mit den ersten Wälzkörperlaufflächen 1i am Fortsatz 1g des Drehkörpers 1 und den zweiten Wälzkörperlaufflächen 13i am Innenumfang der außermittigen Exzenterwellen 13 und den zwischen den ersten Wälzkörperlaufflächen 1i und den zweiten Wälzkörperlaufflächen 13i angeordneten Wälzkörpern 12 erlaubt die Ausführung der Abwälzbewegungen der Zykloidenscheiben am Innenumfang des Getriebegehäuses 10 unter gleichzeitiger Drehung des Drehkörpers 1 um die zentrale Getriebeachse 10x. Dabei findet durch die Kombination der Außermittige-Exzenter-Zykloidenscheiben-Lageranordnung und der Fortsatz-Exzenterwellen-Lageranordnung zugleich eine Transformation der Wälzbewegungen der Zykloidenscheiben 16, 17 in eine Rotationsbewegung des Drehkörpers 1 und umgekehrt statt.
   5.) Der Flansch 24 wird auf die Flächen 1j des Drehkörpers 1 durch das Passstück 24j aufgesetzt und beispielsweise mit Schrauben 24 an den Fortsätzen 1g und Vorsprüngen 1h des Drehkörpers 1 zu einer festen Einheit verbunden. Der Flansch 24 dient nur dazu, die Lager 37 zu tragen. Die so hergestellte feste Einheit zwischen dem Flansch 24 und dem Drehkörper 1 erlaubt deren getrennte und dadurch kostengünstigere Herstellung.

Die Tragfähigkeit von Getrieben nach dem Stand der Technik wird in erster Linie beschränkt durch den Durchmesser der Fortsätze am Drehkörper sowie die Tragfähigkeit der darauf aufgesetzten, insgesamt mit Lageraußen- und Innenring ausgeführten Kegel- oder Zylinderrollenlager, beziehungsweise der Lager, welche die Fortsätze drehbar gegenüber dem Drehkörper dieser Getriebe 01 tragen.

Gemäß DETAIL B in Fig.1-G und Fig.7-G wird die Tragfähigkeit der in Fig. 1-G bis Fig. 18-G dargestellten Getriebe 01, 01.1, 01.2, 01.3 hauptsächlich durch den Durchmesser der auch als Vorsprünge bezeichneten Fortsätze 1g des Drehkörpers 1 sowie die Tragfähigkeit der kurz als Fortsatz-Exzenterwelle-Lageranordnung bezeichneten, integrierten Lageranordnungen mit außermittigem Fortsatz 1g und um dessen Fortsatzachse 13x drehbar gelagerter außermittiger Exzenterwelle 13, zwischen welchem Fortsatz 1g und welcher außermittiger Exzenterwelle 13 zwei Wälzlagerringe angeordnet sind.

Zumindest ein Teil der sich parallel zur Fortsatzachse 13x erstreckenden, konzentrisch um diese angeordneten Fortsatzoberfläche eines jeden Fortsatzes 1g des Drehkörpers 1 ist als eine erste Wälzkörperlauffläche 1i ausgebildet. Auf der ersten Wälzkörperlauffläche 1i wälzen Wälzkörper 12 der zwei bevorzugt ausschließlich Wälzkörper 12 als Wälzlagerelemente umfassenden Wälzlagerringe der Fortsatz-Exzenterwelle-Lageranordnung ab.

Die Wälzlagerringe der Fortsatz-Exzenterwelle-Lageranordnung sind zur Erzielung einer maximalen Tragfähigkeit vorteilhaft ohne Verwendung von Käfigen ausgeführt. Hierdurch kommen in den Wälzlagerringen der Fortsatz-Exzenterwelle-Lageranordnung Wälzkörper 12 in voller möglicher Anzahl zum Einsatz. Die Wälzkörper 12 rollen auf an ringförmigen Innenflächen der außermittigen Exzenterwellen 13 integrierten zweiten Wälzkörperlaufflächen 13i ab.

Diese Lösung ermöglichte es auch, radialen Raum zum Vergrößern des Durchmessers der Fortsätze 1g des Drehkörpers 1 zu erhalten, was eine signifikante Erhöhung der Belastbarkeit des Getriebes 01, 01.1, 01.2, 01.3 um etwa 50% zur Folge hat. So können wesentlich höhere Drehmomente übertragen werden, bei nur geringer Erhöhung des Fertigungsaufwands für die ersten und zweiten Wälzkörperlaufflächen 1i, 13i am Drehkörper 1 und an den außermittigen Exzenterwellen.

Die Wälzkörperlaufflächen 13i und 1i werden durch Feinschleifen hergestellt. Dies stellt einen im Vergleich zu einer Oberflächenbearbeitung, die lediglich zur Anordnung eines Lagers mit Innen- und Außenring zwischen den Flächen dient einen nur geringfügig erhöhten Fertigungsaufwand dar. Dieser erhöhte Fertigungsaufwand wird jedoch durch die höhere Tragfähigkeit der Fortsatz-Exzenterwelle-Lageranordnung im Vergleich zu einem zwischen Fortsatz und außermittiger Exzenterwelle angeordneten Lager mit Innen- und Außenring mehr als aufgewogen. Darüber hinaus vereinfacht die Fortsatz-Exzenterwelle-Lageranordnung im Vergleich zu einem zwischen Fortsatz und außermittiger Exzenterwelle angeordneten Lager mit Innen- und Außenring den Herstellungsprozess, da es nicht mehr erforderlich ist, Lager als Ganzes mit Innen- und Außenring zu kaufen, aufzubewahren und zu montieren.

Außerdem besteht die Möglichkeit, den Aufbau des in DETAIL B Fig. 1-G bis Fig. 7-G dargestellten Getriebes 01 zu vereinfachen. Hierzu besteht die Möglichkeit, die Fortsätze 1g und Vorsprünge 1h am Drehkörper 1 zu kürzen, indem gleichzeitig Vorsprünge 24g und 24h an einem die Fortsätze 1g und Vorsprünge 1h an deren dem Drehkörper 1 abgewandten Enden verbindenden Flansch 24 geschaffen werden. Hierdurch wird eine mehrteilige Einheit bestehend aus dem Drehkörper 1 und dem mit Schrauben 25 angeschraubten Flansch 24 geschaffen, welche einen die mit den außermittigen Exzenterwellen 13 unverdrehbar verbundenen Planetenräder 21 beherbergenden Raum aufweist. Der Flansch 24 mit Vorsprüngen 24g und 24h wird nur mit Schrauben 25 an die Fortsätze 1g und Vorsprünge 1h des Drehkörpers 1 geschraubt, um die feste Einheit zu schaffen. Die zwei Glieder Drehkörper 1 und Flansch 24 der Einheit können separat hergestellt werden. Es ist nicht erforderlich, sie als Ganzes paarweise herzustellen. Eine Kürzung der Fortsätze 1g und Vorsprünge 1h am Drehkörper 1, an dem die Wälzkörperlaufflächen 1a und 1i integriert sind und daher aus hochwertigem Material und mit der notwendigen Fertigungstechnik hergestellt werden müssen, geht vorteilhafterweise mit einer Erzeugung von gegenüberliegenden Vorsprüngen 24g und 24h am Flansch 24 einher. Dies ist vorteilhaft, da der Flansch 24 keine Wälzkörperlaufflächen enthält, so dass er aus deutlich weniger anspruchsvollem Material und mit deutlich weniger anspruchsvoller Produktionstechnologie hergestellt werden kann.

Zur Verbesserung der Herstellbarkeit des Getriebes 01; 01.1 und 01.2 können an den außermittigen Exzenterwellen 13 zylindrische Öffnungen 13h ausgebildet sein, wie in Fig. 1-G, Fig. 2-G, Fig. 7-G, Fig. 9-G, Fig. 10-G, Fig. 17-G dargestellt. In diese Öffnungen 13h greift eine Rolle oder Nadelrolle 14 ein. Diese separat präzise gefertigte Nadelrolle 14 dient einer exakten Winkelausrichtung der Planetenräder 21 gegenüber einem Sonnenrad 28, insbesondere der Ausrichtung einer Außenverzahnung 21b der Planetenräder 21 mit einer Au-ßenverzahnung 28a des Sonnenrads 28.

Ein Stützring 20 ist auf der einen Seite, ein zusätzlicher Stützring 11 auf der gegenüberliegenden Seite der beiden Wälzlagerringe der Fortsatz-Exzenterwellen-Lageranordnung angeordnet. Die beiden Stützringe 11, 20 dienen dazu, die Wälzkörper 12 der beiden Wälzlagerringe der Fortsatz-Exzenterwellen-Lageranordnung in deren axialer Position beidseitig des zwischen den zweiten Wälzkörperlaufflächen am Innenumfang der außermittigen Exzenterwelle 13 zu sichern. Vorteilhaft sind die Stützringe 11 auf den Fortsätzen 1g des Drehkörpers 1 angeordnet, während die Stützringe 20 beim in Fig.1-G bis Fig. 8-G dargestellten Getriebe 01 an den Vorsprüngen 24g des Flansches 24 angeordnet sind. Beim in Fig.9-G bis Fig. 16-G dargestellten Getriebe 01.1, beim in Fig. 17-G dargestellten Getriebe 01.2 und beim in Fig. 18-G dargestellten Getriebe 01.3 befinden sich die Stützringe 20 auf den Fortsätzen 1g des Drehkörpers 1.

Bei einem in Fig. 9-G dargestellten Getriebe 01.1 und bei einem in Fig. 17-G dargestellten Getriebe 01.2 sind beispielsweise als zylindrische Oberflächen ausgeführte Flächen 1j an den Vorsprüngen 1h des Drehkörpers 1 angeordnet, deren Anordnung in Fig. 14-G sehr gut zu erkennen ist. An dem Flansch 24 ist eine beispielsweise ebenfalls als zylindrische Oberfläche ausgeführte Fläche 24j ausgebildet. Die als zylindrische Oberfläche ausgeführte Fläche 24j ist mit gleichem Außendurchmesser ausgeführt, wie der Innendurchmesser der als zylindrische Oberflächen ausgeführten Flächen 1j an den Vorsprüngen 1h des Drehkörpers 1. Flansch 24 und Drehkörper 1 werden durch diese Flächen 1j, 24j gegenseitig zentriert und beispielsweise mit Schrauben 25 zu einer festen Einheit verbunden. Hierdurch wird die Herstellung des Flansches 24 vereinfacht, die in nur einer Aufspannung in der Maschine erfolgen kann.

Bei dem in Fig.1-G bis Fig.7-G dargestellten Getriebe 01 ist es nicht erforderlich, Flansch 24 und Drehkörper derart präzise gegenseitig auszurichten. Deshalb sind die Flächen 24j und 1j beim Getriebe 01 nicht erforderlich. Dies vereinfacht die Herstellung und senkt die Kosten des Drehkörpers 1 und des Flansches 24. Darüber hinaus senkt dies den Montageaufwand.

Die Vorsprünge 24g und 24h des Flansches 24 erfüllen die Funktion, einen Zwischenraum zwischen dem Flansch 24 und dem Drehkörper 1 für ein Sonnenrad zu schaffen, mit dem die Planetenräder 21 der Getriebe 01, 01.1, 01.2 in Eingriff stehen. Der Flansch 24 wird mit den Vorsprüngen 24g und 24h mit den Fortsätzen 1g und Vorsprüngen 1h des Drehkörpers 1 beispielsweise mittels Schrauben 25 verschraubt, um eine feste Einheit zu bilden. Dadurch können der Drehkörper 1 und der Flansch 24 separat hergestellt werden.

Die am Innenumfang des Hohlkörpers 2 (Fig. 1-G bis Fig. 8-G; Fig. 17-G) vorgesehene Innenverzahnung kann in Nuten 2d eingelegte Wälzkörper 18 umfassen. Um die Wälzkörper 18 in den Nuten 2d des Hohlkörpers 2 zu sichern, kann ein Sicherungsring 19 vorgesehen sein. Dies vereinfacht die Herstellung und Montage im Vergleich zu einer Lösung mit Sprengring und zusätzlicher Unterlegscheibe.

Die am Innenumfang des Getriebegehäuses 10 (Fig. 9-G bis Fig. 16-G; Fig. 18-G) vorgesehene Innenverzahnung kann in Nuten 10d eingelegte Wälzkörper 18 umfassen. Um die Wälzkörper 18 in den Nuten 10d des Getriebegehäuses 10 zu sichern, kann ebenfalls ein Sicherungsring 19 vorgesehen sein. Dies vereinfacht die Herstellung und Montage im Vergleich zu einer Lösung mit Sprengring und zusätzlicher Unterlegscheibe.

Sich aus den voranstehend erwähnten Maßnahmen ergebende Vorteile gegenüber dem Stand der Technik sind eine bei unveränderten Außenmassen um etwa 50% erhöhte Belastbarkeit der beschriebenen Getriebe 01, 01.1, 01.2, 01.3.

Es ist ersichtlich, dass dieser in Zusammenhang mit den Fig. 1-G bis Fig. 18-G beschriebene erste Gegenstand der Erfindung alternativ durch eine auch als Fortsatz-Exzenterwelle-Lageranordnung bezeichnete Lageranordnung mit einem Fortsatz 13g eines Drehkörpers 1 und einer gegenüber diesem um eine Fortsatzachse 13x drehbar angeordneten, außermittigen Exzenterwelle 13 eines voranstehend beschriebenen, eine Zykloidgetriebestufe und eine Planetengetriebestufe umfassenden, mehrstufigen Getriebes 01 (Fig. 1-G), 01.1 (Fig. 9-G), 01.2 (Fig. 17-G) verwirklicht sein kann.

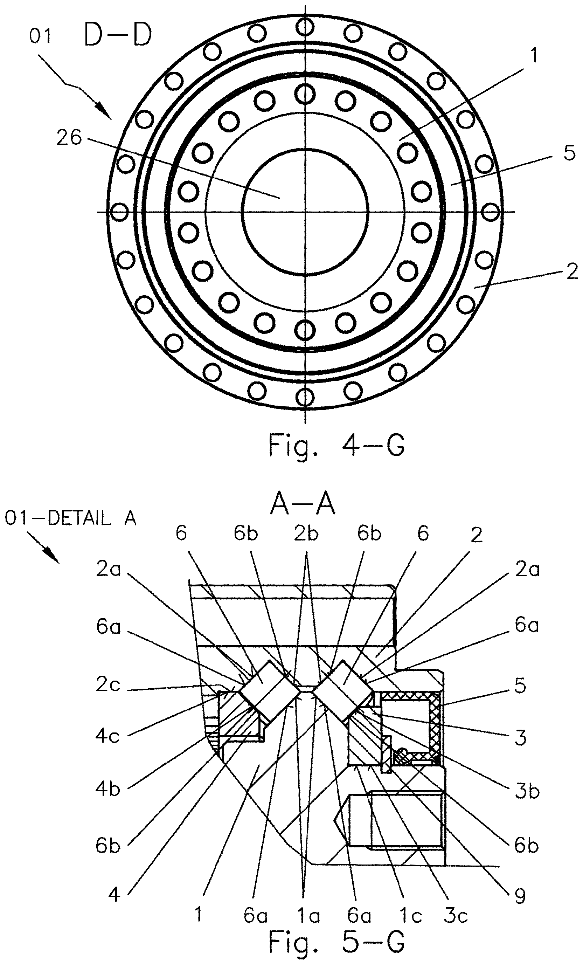

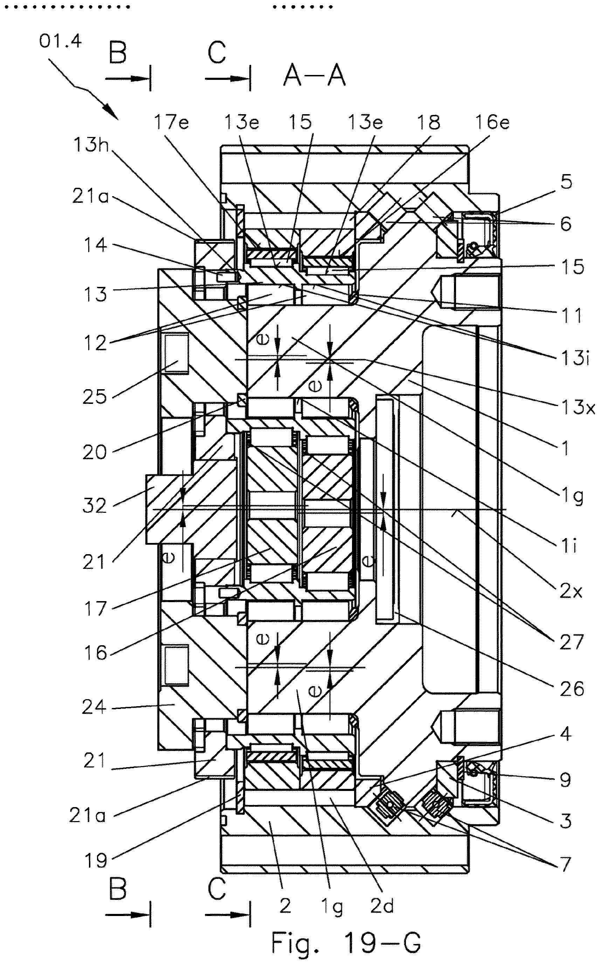

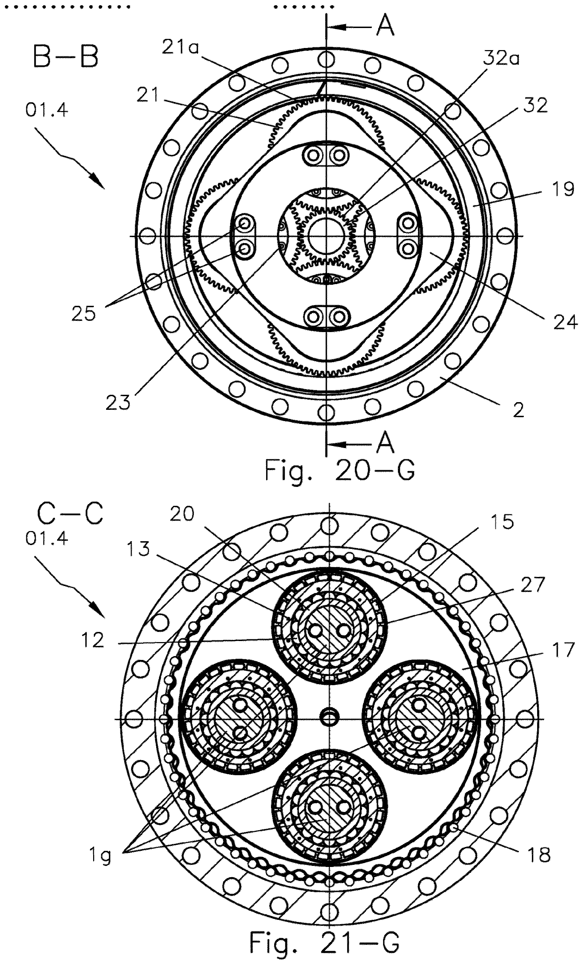

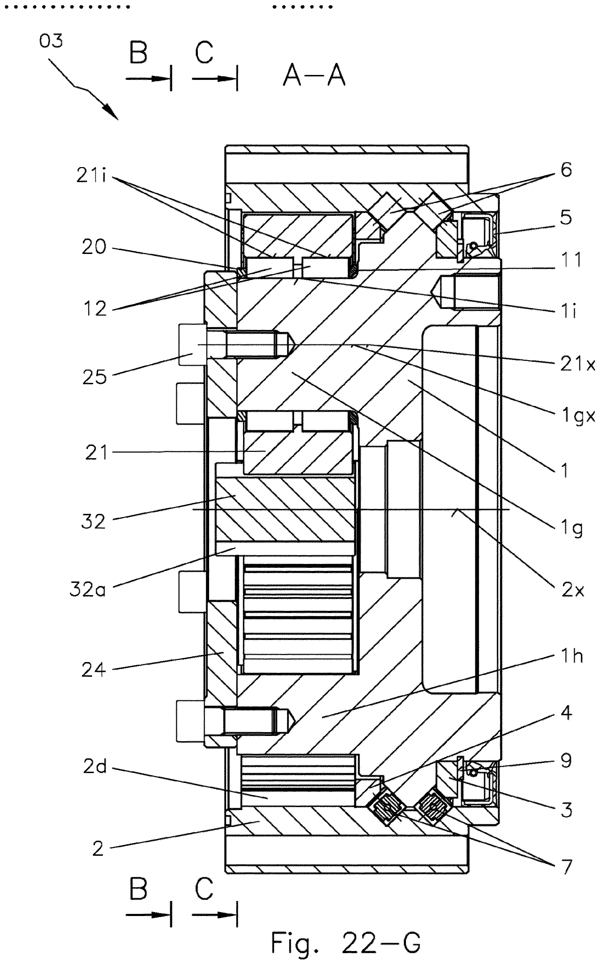

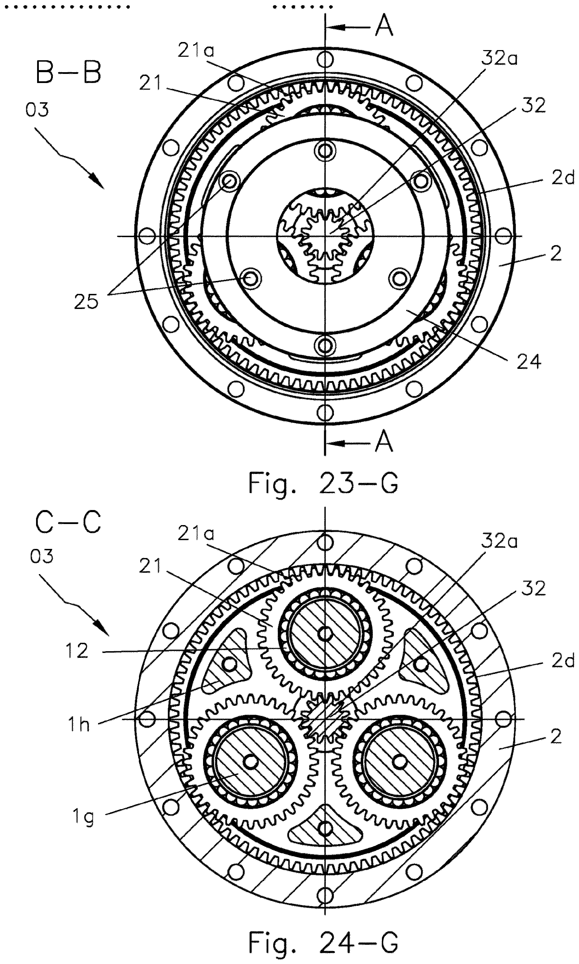

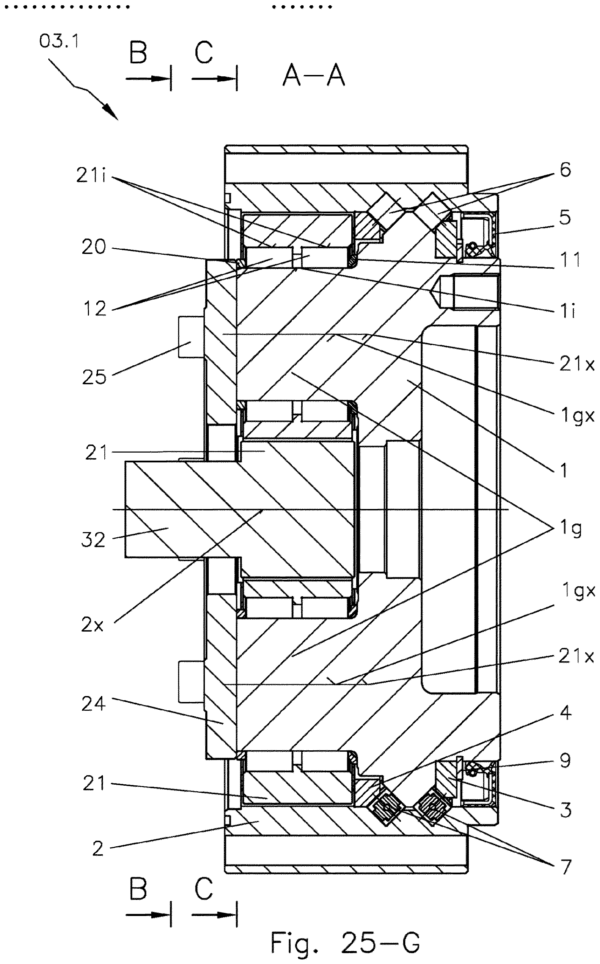

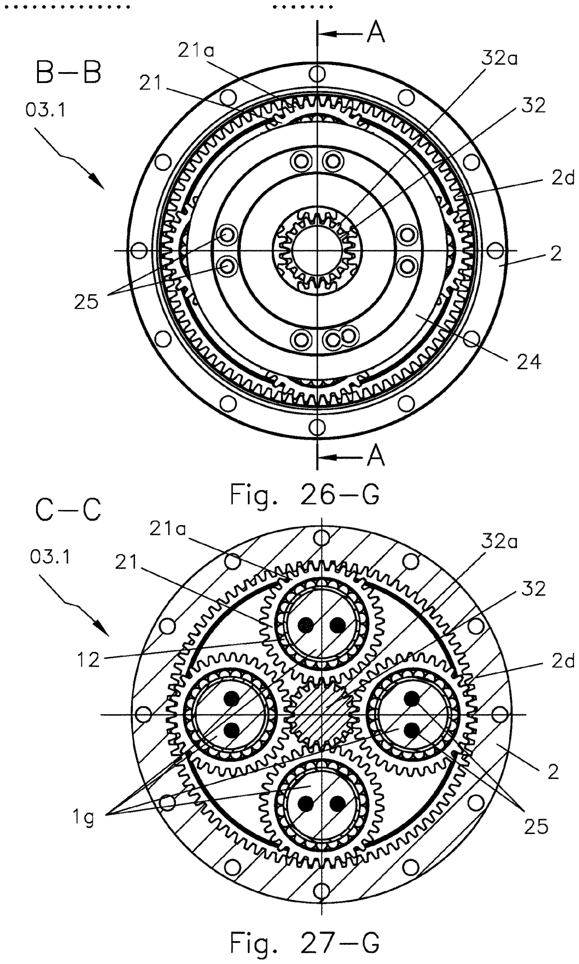

Wichtig ist hervorzuheben, dass bei einem voranstehend beschriebenen, in den Fig. 1-G bis Fig. 8-G dargestellten Getriebe 01 sowie in den Fig. 9-G bis Fig. 16-G dargestellten Getriebe 01.1 zur Erhöhung der Tragfähigkeit der Lagerung des Drehkörpers 1 im Hohlkörper 2 alternativ oder zusätzlich eine nachfolgend beschriebene und in den Fig. 1-L bis Fig. 27-L dargestellte, kurz als Hohl-Drehkörper-Lageranordnung bezeichnete Lageranordnung mit Hohlkörper 2 und Drehkörper 1 vorgesehen sein kann, wie zudem in Fig. 1-G, Fig. 5-G, Fig. 6-G, Fig. 8-G, Fig. 9-G, Fig. 13-G, Fig. 14-G, Fig. 15-G gezeigt. Die Hohl-Drehkörper-Lageranordnung umfasst ein ausgangsseitiges zweireihiges Wälzlager mit Schrägkontakt in Sonderausführung (Fig. 1-G, Fig. 5-G,- Fig. 6-G) und ist in den Aufbau des Getriebes 01 integriert. Die Hohl-Drehkörper-Lageranordnung weist zwei Wälzlagerringe aus beispielsweise abwechselnd Wälzkörper 6 und Separatoren 7 umfassenden Wälzlagerelementen auf. Diese sind beidseitig eines zu beiden Seiten Wälzkörperlaufflächen 1a aufweisenden Vorsprungs angeordnet. Auf den dem Vorsprung abgewandten Seiten der Wälzlagerringe sind zwei Stützringe 3, 4 angeordnet. Diese sind mit Stützflächen 3b und 4b versehen, die keine berührende Wälzlagerlaufbahn enthalten müssen. Diese Gestaltung der Hohl-Drehkörper-Lageranordnung ermöglicht einen übersichtlichen und vereinfachten Zusammenbau mit Wälzkörpern 6 und beispielsweise als Trennstege ausgeführte oder auch so bezeichnete Separatoren 7 zu einem Ganzen. Anhand des in Fig. 8-G a) bis g) Schritt für Schritt gezeigten Zusammenbaus der Hohl-Drehkörper-Lageranordnung ist ersichtlich, dass diese eine Einstellung des Lagerspiels und der Lagervorspannung erlaubt. Darüber hinaus ist es möglich, die Hohl-Drehkörper-Lageranordnung durch Umkehrung des Montagevorgangs gemäß Fig. 8-G zu demontieren. Der Drehkörper 1 des Getriebes 01 erfüllt bei der Lageranordnung mit Hohlkörper 2 und Drehkörper 1 auch die Funktion des integrierten inneren Lagerrings. Im Hohlkörper 2, der gleichzeitig die Funktion des integrierten äußeren Lagerrings der als zweireihiges Abtriebs-Schrägrollenlager ausgeführten Hohl-Drehkörper-Lageranordnung erfüllt, ist der beispielsweise das Ausgangselement des Getriebes 01 bildende Drehkörper 1 in zwei Wälzlagerringen wälzgelagert. Die Wälzlagerringe umfassen Wälzkörper 6, zwischen denen sich Trennstege als Separatoren 7 befinden. Hohlkörperseitig sind Wälzkörperlaufflächen 2a ausgebildet. Die Wälzkörper 6 wälzen mit ihren Rollflächen 6a hohlkörperseitig auf den Wälzkörperlaufflächen 2a und drehkörperseitig auf den Wälzkörperlaufflächen 1a ab. Die Wälzkörperlaufflächen 1a am Drehkörper 1 und die Wälzkörperlaufflächen 2a sind jeweils unter einem Winkel von 45° gegenüber der mit der Hohlkörperachse 2x übereinstimmenden Drehkörperachse 01x geneigt angeordnet. Die Wälzkörperachsen der Wälzkörper 6 der beiden Wälzlagerringe schneiden die Hohlkörperachse vorteilhaft auf gegenüberliegenden Seiten des Getriebes 01, besonders bevorzugt außerhalb des Getriebes 01. Zur Führung der Stirnflächen 6b der Wälzkörper 6 sind am Hohlkörper 2 unter einem Winkel von 45° gegenüber der mit der Hohlkörperachse 2x übereinstimmenden Drehkörperachse 01x entgegen der Neigung der Wälzkörperlaufflächen 2a geneigte Stützflächen 2b ausgebildet (Fig. 5-G). Die Hohl-Drehkörper-Lageranordnung weist darüber hinaus zwei zusätzliche Stützringe 3, 4 auf. An den Stützringen 3, 4 sind unter einem Winkel von 45° gegenüber der mit der Hohlkörperachse 2x übereinstimmenden Drehkörperachse 01x entgegen der Neigung der Wälzkörperlaufflächen 1a geneigte Stützflächen 3b, 4b ausgebildet. Die Stützflächen 3b und 4b führen die Stirnfächen 6b der Wälzkörper 6. Dadurch können die Stützringe 3, 4 frei von Wälzkörperlaufflächen ausgeführt sein. Statt aufwändig veredelter Wälzkörperlaufflächen sind an den den Wälzlagerringen zugewandten Stirnflächen der Stützringe 3, 4 lediglich Stützflächen 45° 3b und 4b mit erhöhter Oberflächenhärte ausgebildet. Dies ist in entsprechender deutlich weniger anspruchsvoller Fertigungsgenauigkeit möglich, entsprechend der Funktion lediglich der Führung der Wälzkörper 6 an deren Stirnflächen 6b. Der Stützring 3 wird mit der Fläche 3c auf den Sitz 1c am Drehkörper 1 aufgelegt und in seiner Position durch den Sprengring 9 gesichert. Der Stützring 4 ist mit der Fläche 4c in der Halterung 2c am Hohlkörper 2 angeordnet. Die Verwendung zusätzlicher Stützringe 3, 4 ermöglicht eine vereinfachte und optisch eindeutige Montage der Wälzkörper 6 und Trennstücke als Separatoren 7 zwischen Drehkörper 1 und Hohlkörper 2. Die schrittweise Montage der Wälzkörper 6 und Trennstücke als Separatoren 7 zwischen Drehkörper 1 und Hohlkörper 2 sowie zwischen den Stützringen 3, 4 ist in Fig. 8-G von a) bis g) dargestellt, einschließlich des Einbaus einer Dichtung 5 zur Abdichtung des Getriebes 01 zwischen den Drehkörper 1 und Hohlkörper 2.

Es ist ersichtlich, dass der die Getriebe 01, 01.1, 01.2, 01.3 betreffende Gegenstand der Erfindung alternativ durch eine oder mehrere Lageranordnungen für kompakt zu bauende, als Zykloidgetriebe ausgeführte Getriebe 01, 01.1, 01.2, 01.3 mit zwei relativ zueinander drehbaren Lagerorganen, zwischen denen zwei Wälzlagerringe angeordnet sind, verwirklicht sein kann.

Bei diesen Lagerorganen handelt es sich:
- bei einer Hohl-Drehkörper-Lageranordnung um einem Hohlkörper 2 mit einer Hohlkörperachse 2x und einem gegenüber diesem um die Hohlkörperachse 2x drehbar angeordneten Drehkörper 1,
- bei einer Fortsatz-Exzenterwelle-Lageranordnung um einen am Drehkörper 1 angeordneten außermittigen Fortsatz 1g und der an diesem um die Fortsatzachse 13x drehbar gelagerten außermittigen Exzenterwelle 13,
- bei einer Zentrale-Exzenterwelle-Zykloidenscheibe-Lageranordnung um eine Zykloidenscheibe 16, 17 mit einer zentralen Öffnung und einen in der zentralen Öffnung drehbar angeordneten exzentrischen Abschnitt 36f einer zentralen Exzenterwelle 36,
- bei einer Außermittige-Exzenter-Zykloidenscheiben-Lageranordnung um eine Zykloidenscheibe 16, 17 mit einer oder mehreren äußermittigen Öffnungen und einen in einer außermittigen Öffnung drehbar angeordneten exzentrischen Abschnitt 13e einer außermittigen Exzenterwelle 13.

Die beschriebenen Getriebe 01, 01.1, 01.2, 01.3, können einzelne oder eine Kombination der zuvor beschriebenen und/oder in den nachfolgenden Ansprüchen in Verbindung mit einer Lageranordnung angeführten Merkmale aufweisen, ebenso wie die beschriebenen Lageranordnungen einzelne oder eine Kombination mehrerer zuvor beschriebenen und/oder in den nachfolgenden Ansprüchen in Verbindung mit einem Getriebe 01, 01.1, 01.2, 01.3 angeführte Merkmale aufweisen können.

Sämtliche beschriebenen Lageranordnungen und/oder Getriebe können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den in den Zeichnungen dargestellten Ausführungsbeispielen beschriebene Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von kompakt bauenden Getrieben, insbesondere von Präzisionsgetrieben, insbesondere von Zykloidgetriebe umfassenden Getrieben, gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Getriebe
- 01.1: Getriebe
- 01.2: Getriebe
- 01.3: Getriebe
- 01.4: Getriebe (Struktur)
- 01.5: Getriebe (Struktur)
- 02: Lageranordnung (Hohl-Drehkörper-Lageranordnung)
- 02.1: Lageranordnung
- 02.2: Lageranordnung
- 02.3: Lageranordnung
- 02.4: Lageranordnung
- 02.5: Lageranordnung
- 02.6: Lageranordnung
- 02.7: Lageranordnung
- 02.8: Lageranordnung
- 02.9: Lageranordnung
- 02.10: Lageranordnung
- 02.11: Lageranordnung
- 02.12: Lageranordnung
- 02.13: Lageranordnung
- 02.14: Lageranordnung
- 02.15: Lageranordnung
- 02.16: Lageranordnung
- 02.17: Lageranordnung
- 02.18: Lageranordnung
- 02.19: Lageranordnung
- 01x: Drehkörperachse
- 1: Drehkörper
- 1a: Wälzkörperlauffläche (am Drehkörper)
- 1c: Sitz (am Drehkörper 1)
- 1d: Innenverzahnung (am Drehkörper 1)
- 1e: Loch
- 1g: Fortsatz (am Drehkörper 1)
- 1h: Vorsprung (am Drehkörper 1)
- 1i: erste Wälzkörperlauffläche (am Fortsatz 1g des Drehkörpers 1)
- 1j: Fläche
- 1z: Außenverzahnung
- 2: Hohlkörper
- 2a: Wälzkörperlauffläche (am Hohlkörper)
- 2b: Stützfläche (am Hohlkörper)
- 2c: Sitz (am Hohlkörper)
- 2d: Nut
- 2e: Loch
- 2f: Schmierloch
- 2j: Fläche
- 2x: Hohlkörperachse
- 2z: Außenverzahnung
- 3: Stützring
- 3b: Stützfläche (am Stützring 3 ausgebildet)
- 3c: Fläche
- 4: Stützring
- 4b: Stützfläche (am Stützring 4 ausgebildet)
- 4c: Fläche
- 5: Dichtung
- 6: Wälzkörper (der Hohl-Drehkörper-Lageranordnung)
- 6a: Rollfläche (Mantelfläche des Wälzkörpers 6)
- 6b: Stirnfläche (des Wälzkörpers 6)
- 7: Separator
- 8: Sprengring
- 9: Sprengring
- 10: Getriebegehäuse
- 10c: Halterung
- 10d: Nut
- 10j: Fläche
- 10x: zentrale Getriebeachse
- 11: Stützring
- 12: Wälzkörper (der Fortsatz-Exzenterwelle-Lageranordnung)
- 13: außermittige Exzenterwelle
- 13e: exzentrischer Abschnitt
- 13h: Öffnung (am der Exzenterwelle 13)
- 13i: zweite Wälzkörperlauffläche (am Innenumfang der Exzenterwelle 13)
- 13x: Fortsatzachse
- 14: Nadelrolle
- 15: Wälzkörper
- 16: Zykloidenscheibe
- 16b: Außenverzahnung (der Zykloidenscheibe 16)
- 16e: zweite Wälzkörperlauffläche (in außermittiger Öffnung an Zykloidenscheibe 16)
- 16f: zweite Wälzkörperlauffläche (in zentraler Öffnung an Zykloidenscheibe 16)
- 17: Zykloidenscheibe
- 17b: Außenverzahnung (der Zykloidenscheibe 17)
- 17e: zweite Wälzkörperlauffläche (in außermittiger Öffnung an Zykloidenscheibe 17)
- 17f: zweite Wälzkörperlauffläche (in zentraler Öffnung an Zykloidenscheibe 17)
- 18: Wälzkörper
- 19: Sicherungsring
- 20: Stützring
- 21: Planetenrad
- 21a: Außenverzahnung (am Planetenrad 21)
- 21b: Form
- 22: Schraube
- 23: Schraube
- 24: Flansch
- 24g: Vorsprung
- 24h: Vorsprung
- 24j: Fläche
- 25: Schraube
- 26: Verschlussstopfen
- 27: Käfig
- 28: Sonnenrad
- 28a: Außenverzahnung (des Sonnenrads 28)
- 29: Lager
- 30: Stirnrad
- 30a: Verzahnung
- 31: Lager
- 32: Ritzel
- 32a: Verzahnung
- 33: Vierpunktkontaktkugellager
- 34: Schrägkugellager
- 35: Lager mit gekreuzten Rollen
- 36: zentrale Exzenterwelle
- 36f: exzentrischer Abschnitt (der zentralen Exzenterwelle)
- 37: Lager
- 38: Rolle
- 40: O-Ring
- 41: Beschickungsloch
- 42: Sicherungsring (am Sonnenrad 28)
- 43: Lager
- 44: Stützring
- 44b: Stützfläche
- 44e: Loch
- 45: Sicherungsring (am Flansch 24)
- 46: Sicherungsring (am Sonnenrad 28)
- 55: Dichtung
- 55a: Dichtung
- 55b: Dichtung
- 100: Flansch
- 100c: Sitz
- 101: Flansch
- 102: Flansch (ersetzt Stützring 4 mit Stützfläche 4b)
- 102b: Stützfläche
- 103: Maschinengestell
- 110: Schraube
- 111: Schraube
- 112: Schraube
- 113: Schraube
- 114: Schraube
- 115: Schraube
- 120: O-Ring
- 121: O-Ring
- 122: O-Ring
- 123: O-Ring
- 200: Flansch
- 201: Flansch
- 202: Montageflansch
- 203: Montageflansch
- 444: Stützring
- 444b: Stützfläche
- 444e: Loch

- e: Exzentrizität

## Patentansprüche

1. Getriebe (01, 01.1, 01.2, 01.3) mit einem Hohlkörper (2) mit einer Hohlkörperachse (2x), mindestens einer in diesem abwälzenden Zykloidenscheibe (16, 17) mit mindestens einer außermittigen Öffnung, einem um die Hohlkörperachse (2x) drehbar gelagerten Drehkörper (1) und einer oder mehreren jeweils an einem sich entlang einer Fortsatzachse (13x) parallel zur Hohlkörperachse (2x) erstreckenden außermittigen Fortsatz (1g) des Drehkörpers (1) gemeinsam um die Hohlkörperachse (2x) umlaufend und gegenüber dem Drehkörper (1) drehbar gelagerten außermittigen Exzenterwellen (13) mit einer der Anzahl der Zykloidenscheiben (16, 17) entsprechenden Zahl von exzentrischen Abschnitten (13e), mit denen die außermittigen Exzenterwellen (13) in jeweils einer außermittigen Öffnung der Zykloidenscheibe (16, 17) drehbar gelagert sind, und mit einer der Fortsatzachse (13x) zugewandten inneren Mantelfläche, umfassend eine Lageranordnung mit dem außermittigen Fortsatz (1g) und der an diesem um die Fortsatzachse (13x) drehbar gelagerten außermittigen Exzenterwelle (13), wobei:
- zumindest ein Abschnitt einer sich parallel zur Fortsatzachse (13x) erstreckenden, konzentrisch um diese angeordneten Fortsatzoberfläche als eine erste Wälzkörperlauffläche (1i) ausgebildet ist,
- entlang der dem Fortsatz (1g) zugewandten inneren Mantelfläche ein axialer Trennsteg ausgebildet ist,
- zumindest die durch den Trennsteg voneinander getrennten Partien der inneren Mantelfläche als zweite Wälzkörperlaufflächen (13i) ausgebildet sind,
- in axialer Richtung beidseitig des Trennstegs jeweils ein Wälzlagerring zwischen den jeweiligen ersten und zweiten Wälzkörperlaufflächen (1i, 13i) angeordnet ist,
- in axialer Richtung beidseitig der Wälzlagerringe jeweils ein Stützring (11, 20) angeordnet ist, und
- die Stützringe (11, 20) zumindest eine der Wälzkörperlaufflächen (1i, 13i) normal zur Fortsatzachse (13x) überragen.

2. Getriebe (01, 01.1, 01.2) nach Anspruch 1, wobei gemeinsam mit den außermittigen Exzenterwellen (13) um die Fortsatzachsen (13x) drehbare Planetenräder (21) unverdrehbar mit den außermittigen Exzenterwellen (13) verbunden sind, welche gemeinsam mit den außermittigen Exzenterwellen (13) um die Hohlkörperachse (2x) umlaufen.

3. Getriebe nach Anspruch 1 oder 2, wobei die Wälzlagerringe der Lageranordnung Wälzkörper (12) mit parallel zu den Fortsatzachsen (13x) verlaufenden Wälzkörperachsen umfassen.

4. Getriebe nach Anspruch 1, 2 oder 3, wobei die Wälzlagerringe der Lageranordnung frei von Separatoren oder Käfigen ausgeführt sind.

5. Getriebe nach einem der Ansprüche 1 bis 4, wobei der Drehkörper (1) einseitig drehbar am Hohlkörper (2) gelagert ist.

6. Getriebe nach einem der voranstehenden Ansprüche, wobei es eine zentrale Exzenterwelle (36) mit einer der Anzahl der Zykloidenscheiben entsprechenden Zahl von exzentrischen Abschnitten (36f) aufweist, jeder von denen in einer zentralen Öffnung genau einer Zykloidenscheibe (16, 17) drehbar gelagert ist, sowie jeweils eine Lageranordnung mit dem jeweiligen exzentrischen Abschnitt (36f) und der jeweiligen Zykloidenscheibe (16, 17), zwischen denen jeweils mindestens ein Wälzlagerring angeordnet ist, wobei jeder exzentrische Abschnitt (36f) eine als erste Wälzkörperlauffläche ausgebildete, in axialer Richtung zu beiden Seiten hin durch einen radialen Vorsprung weg von der Hohlkörperachse (2x) begrenzte kreisringförmige Außenfläche aufweist, und die zentrale Öffnung in ihrem kleinsten Innendurchmesser eine als zweite Wälzkörperlauffläche (16f, 17f) ausgebildete, kreisringförmige Innenfläche aufweist, und ein zwischen den Vorsprüngen in axialer Richtung gesicherter Wälzlagerring zwischen den jeweiligen ersten und zweiten Wälzkörperlaufflächen (36f, 16f, 17f) angeordnet ist.
